(19) Europäisches Patentamt / European Patent Office / Office européen des brevets

(11) **EP 4 405 403 B1**

(12) # EUROPEAN PATENT SPECIFICATION

(45) Date of publication and mention of the grant of the patent:
**02.07.2025 Bulletin 2025/27**

(21) Application number: **22797029.0**

(22) Date of filing: **22.09.2022**

(51) International Patent Classification (IPC):
***C08F 210/06*** *(2006.01)* ***C08L 23/14*** *(2006.01)*
***C08J 5/18*** *(2006.01)*

(52) Cooperative Patent Classification (CPC):
(C-Sets available)
**C08J 5/18; C08F 210/06; C08L 23/142;**
C08F 4/65912; C08F 4/65916; C08J 2323/14
(Cont.)

(86) International application number:
**PCT/EP2022/076347**

(87) International publication number:
**WO 2023/046824 (30.03.2023 Gazette 2023/13)**

(54) **MONOPHASIC BIMODAL PROPYLENE/ETHYLENE/1-BUTENE RANDOM TERPOLYMER COMPOSITIONS WITH IMPROVED OPTICAL AND SEALING PROPERTIES**

MONOPHASIGE BIMODALE PROPYLEN/ETHYLEN/1-BUTEN-ZUFALLSTERPOLYMER-ZUSAMMENSETZUNGEN MIT VERBESSERTEN OPTISCHEN UND ABDICHTENDEN EIGENSCHAFTEN

COMPOSITIONS ALÉATOIRES MONOPHASIQUES BIMODALES DE TERPOLYMÈRES DE PROPYLÈNE/ÉTHYLÈNE/1-BUTÈNE AYANT DES PROPRIÉTÉS OPTIQUES ET D'ÉTANCHÉITÉ AMÉLIORÉES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.09.2021 EP 21198617**

(43) Date of publication of application:
**31.07.2024 Bulletin 2024/31**

(73) Proprietor: **Borealis AG**
**1020 Vienna (AT)**

(72) Inventors:
- **FAWAZ, Joel**
  **4021 Linz (AT)**
- **WANG, Jingbo**
  **4021 Linz (AT)**
- **GAHLEITNER, Markus**
  **4021 Linz (AT)**
- **BERNREITNER, Klaus**
  **4021 Linz (AT)**
- **LESKINEN, Pauli**
  **06101 Porvoo (FI)**

(74) Representative: **Maiwald GmbH**
**Elisenhof**
**Elisenstraße 3**
**80335 München (DE)**

(56) References cited:
**WO-A1-2020/157171** **WO-A2-2014/139811**
**US-B2- 10 233 271**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/06, C08F 2/001;**
**C08F 210/06, C08F 4/65927;**
**C08L 23/142, C08L 23/142;**
C08F 210/06, C08F 210/08, C08F 210/16,
C08F 2500/12, C08F 2500/27, C08F 2500/35,
C08F 2500/33, C08F 2500/34, C08F 2500/26,
C08F 2500/36;
C08F 210/06, C08F 210/08, C08F 210/16,
C08F 2500/12, C08F 2500/27, C08F 2500/36;
C08F 210/06, C08F 210/16, C08F 210/08,
C08F 2500/12, C08F 2500/27, C08F 2500/36

## Description

The present invention relates to a monophasic bimodal propylene/ethylene/1-butene random terpolymer composition (PP), articles, especially films, comprising said composition and a process for producing said composition.

## Background to the Invention

Optimization of cast films based on copolymers of polypropylene (PP) is a multi-faceted problem. Many attempts have been made for optimizing the materials suitable for film. WO 2002/057342 A1 describes a biaxially oriented PP (BOPP) film made from Ziegler-Natta catalyst derived copolymers comprising at least 0.8 wt.-% ethylene, particularly 0.8 to 1.5 wt.-%. Although PP terpolymers are speculatively mentioned, such materials are not disclosed in this case. The cast films made from the PP copolymers showed undesirably high haze. WO 2009/019169 A1 describes a process for providing Ziegler-Natta catalyst derived PP terpolymers suitable for blown film comprising at least 8 wt.-% of total comonomer with the comonomer units being derived from ethylene and $C_4$ to $C_8$ alpha olefins by way of using 1,3-diether internal donor catalyst. According to WO 2009/019169 A1, an optimal balance of properties shall be observed when an ethylene content of lower than 2.5 wt.-% is combined with a 1-butene-1 content of higher than 10 wt.-%, whereby alternatively when ethylene content is higher than 2.5 wt.-%, 1-butene content should be lower than 10 wt.-%. A composition having an ethylene content of 1.2 wt.-% and 11.3 wt.-% 1-butene, i.e. a $C_4/C_2$ (wt/wt) ratio of 9.4 resulted in a SIT as low as 107.4°C and 0.2 % haze (1mm plaque). However, the films had inacceptable high levels of hexane (C6) extractables of 2.8 wt.-% or above. US 6,388,040 concerns BOPP films, i.e. a totally different type of film made from compositions having varying melting temperatures.

EP 3192817 A1 discloses a method for providing a terpolymer including units derived from 1-butene using a crosslinked metallocene compound. The terpolymers produced by this method have high amounts of ethylene and high amounts of 1-butene.

EP 1358252 A1 discloses C3/C2/C4 terpolymers with melting temperatures of 155 °C or higher.

WO 2013/174778 discloses a propylene based terpolymer of C2, C3 and C4 monomer units made from Ziegler-Natta catalysts. According to WO 2013/174778 the SIT was reported to be below 110 °C, like 106 °C. However, the XCS is relatively high in the range of 5 - 15 wt.% at 25 °C and the disclosed films had an inacceptable high level of hexane (C6) extractables (FDA) of 1.8 or above.

WO 2020/157171 A1 is related to a bimodal propylene terpolymer, which combines low sealing initiation temperature (SIT), high melting temperature, good processability and good optical properties, like low haze.

Thus, there remains a need for a PP terpolymer based cast film having low sealing initiation temperature such as no greater than 115 °C, high clarity such as at least 90% and particularly low hexane extractables (FDA) such as below 1.00 wt.-%. Simultaneously, the film should have good Hot Tack properties.

These aspects are addressed in the present invention, which is based on the finding that a favourable combination of low hexane extractables, high clarity, good processability and good sealing properties can be provided by utilizing bimodal C3/C2/C4 terpolymers having a certain content of 2,1-regiodefects.

## Summary of the Invention

The present invention is based upon the finding that a monophasic bimodal propylene/ethylene/1-butene terpolymer having specific properties, including defined melt flow rate and comonomer contents, of both the final composition and each constituent fraction, has improved optical and sealing properties.

The present invention is directed to a monophasic bimodal propylene/ethylene/1-butene random terpolymer composition (PP) comprising:

a) 40 to 90 wt.-%, relative to the total weight of the monophasic bimodal propylene/ethylene/1-butene random terpolymer composition, of a first random terpolymer fraction (PP1), having an ethylene content (C2), as determined by $^{13}C$-NMR spectroscopy, in the range from 0.3 to 3.0 mol-%, and a 1-butene content (C4), as determined by $^{13}C$-NMR spectroscopy, in the range from 1.0 to 5.0 mol-%; and

b) 10 to 60 wt.-%, relative to the total weight of the monophasic bimodal propylene/ethylene/1-butene random terpolymer composition, of a second random terpolymer fraction (PP2), having an ethylene content (C2), as determined by $^{13}C$-NMR spectroscopy, in the range from 3.0 to 7.0 mol-%, and a 1-butene content (C4), as determined by $^{13}C$-NMR spectroscopy, in the range from 2.0 to 6.0 mol-%,

wherein the first random terpolymer fraction (PP1) and the second random terpolymer fraction (PP2) combined make up at least 95 wt.-% of the total weight of the monophasic bimodal propylene/ethylene/1-butene random terpolymer composition (PP),

wherein the monophasic bimodal propylene/ethylene/1-butene random terpolymer composition (PP) has each of the following properties:

i) an ethylene content (C2), as determined by $^{13}$C-NMR spectroscopy, in the range from 1.0 to 4.0 mol-%;
ii) a 1-butene content (C4), as determined by $^{13}$C-NMR spectroscopy, in the range from 1.5 to 4.5 mol-%;
iii) a melt flow rate ($MFR_2$), determined according to ISO 1133 at 230 °C at a load of 2.16 kg, in the range from 3.0 to 10 g/10 min; and
iv) a content of 2,1-regiodefects, as determined by quantitative $^{13}$C-NMR spectroscopy analysis, in the range from 0.1 to 1.5 mol%.

In a further embodiment, the present application is directed to a process for producing the monophasic bimodal monophasic bimodal propylene/ethylene/1-butene random terpolymer composition (PP) of the present invention, comprising the steps of:

a) polymerizing propylene, ethylene and 1-butene comonomer units in a first polymerization reactor in the presence of a single-site catalyst to produce a first polymerization mixture comprising the first random terpolymer fraction (PP1) and the single-site catalyst, wherein the first polymerization reactor is preferably a slurry reactor, more preferably a loop reactor;
b) transferring the first polymerization mixture into a second polymerization reactor, preferably a gas phase reactor;
c) polymerizing propylene, ethylene and 1-butene comonomer units in said second polymerization reactor in the presence of said single-site catalyst to produce a second polymerization mixture comprising the first random terpolymer fraction (PP1), the second random terpolymer fraction (PP2) and the single-site catalyst;
d) withdrawing said second polymerization mixture from said second polymerization reactor; and
e) compounding said second polymerization mixture optionally with the addition of additives to form the monophasic bimodal propylene/ethylene/1-butene random terpolymer composition (PP).

In a final aspect, the present invention is directed to an article, more preferably a film, comprising the monophasic bimodal propylene/ethylene/1-butene random terpolymer composition (PP) of the invention in an amount of at least 75 wt.-%, more preferably at least 90 wt.-%, most preferably at least 95 wt.-%.

**Definitions**

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

In the following amounts are given in % by weight (wt.-%) unless it is stated otherwise.

A propylene homopolymer is a polymer that essentially consists of propylene monomer units. Due to impurities especially during commercial polymerisation processes, a propylene homopolymer can comprise up to 0.1 mol% comonomer units, preferably up to 0.05 mol% comonomer units and most preferably up to 0.01 mol% comonomer units.

A propylene random copolymer is a copolymer of propylene monomer units and comonomer units, preferably selected from ethylene and $C_4$-$C_8$ alpha-olefins, in which the comonomer units are distributed randomly over the polymeric chain. The propylene random copolymer can comprise comonomer units from one or more comonomers different in their amounts of carbon atoms.

A propylene random terpolymer is a random copolymer, as described above, which comprises of propylene and two different comonomer units, typically propylene, ethylene and a $C_4$-$C_8$ alpha-olefin.

Pseudo terpolymers being made from mixtures of two copolymers (e.g. a mixture of a propylene/ethylene copolymer with a propylene/1-butene copolymer) do not subsume under the term "terpolymer" according to the present invention. Pseudo terpolymers can be recognized by coupled TREF-IR, coupled TREF-NMR or similar methods.

Typical for monophasic propylene homopolymers and monophasic propylene random copolymers (including monophasic propylene random terpolymers) is the presence of only one glass transition temperature.

Bimodal polymers are polymers having a bimodal distribution of one or more properties. Bimodal random propylene terpolymers may typically be bimodal with respect to comonomer content or bimodal with respect to molecular weight (as seen through the melt flow rates of the first fraction and the final composition).

**Detailed Description**

## Monophasic bimodal propylene/ethylene/1-butene random terpolymer composition (PP)

The monophasic bimodal propylene/ethylene/1-butene random terpolymer composition (PP) comprises 40 to 90 wt.-%, relative to the total weight of the monophasic bimodal propylene/ethylene/1-butene random terpolymer composition, of a first random terpolymer fraction (PP1) and 10 to 60 wt.-%, relative to the total weight of the monophasic bimodal propylene/ethylene/1-butene random terpolymer composition, of a second random terpolymer fraction (PP2).

More preferably, the bimodal propylene/ethylene/1-butene random terpolymer composition (PP) comprises 50 to 85 wt.-%, relative to the total weight of the monophasic bimodal propylene/ethylene/1-butene random terpolymer composition, of the first random terpolymer fraction (PP1) and 15 to 50 wt.-%, relative to the total weight of the monophasic bimodal propylene/ethylene/1-butene random terpolymer composition, of the second random terpolymer fraction (PP2).

It is particularly preferred that the monophasic bimodal propylene/ethylene/1-butene random terpolymer composition (PP) comprises 60 to 80 wt.-%, relative to the total weight of the monophasic bimodal propylene/ethylene/1-butene random terpolymer composition, of the first random terpolymer fraction (PP1) and 20 to 40 wt.-%, relative to the total weight of the monophasic bimodal propylene/ethylene/1-butene random terpolymer composition, of the second random terpolymer fraction (PP2).

The first random terpolymer fraction (PP1) and the second random terpolymer fraction (PP2) combined make up at least 95 wt.-% of the total weight of the monophasic bimodal propylene/ethylene/1-butene random terpolymer composition (PP).

In addition to the first random terpolymer fraction (PP1) and the second random terpolymer fraction (PP2), the monophasic bimodal propylene/ethylene/1-butene random terpolymer composition (PP) may comprise further additives known in the art; however, this remaining part shall be not more than 5.0 wt.-%, like not more than 3.0 wt.-% within the monophasic bimodal propylene/ethylene/1-butene random terpolymer composition (PP). For instance, the monophasic bimodal propylene/ethylene/1-butene random terpolymer composition (PP) may comprise additionally small amounts of additives (A) selected from the group consisting of antioxidants, stabilizers, fillers, colorants, nucleating agents and antistatic agents. In general, they may be incorporated during the compounding of the monophasic bimodal propylene/ethylene/1-butene random terpolymer composition (PP).

In case the monophasic bimodal propylene/ethylene/1-butene random terpolymer composition (PP) comprises an $\alpha$-nucleating agent, it is preferred that it is free of $\beta$-nucleating agents. The $\alpha$-nucleating agent is preferably selected from the group consisting of

(i) salts of monocarboxylic acids and polycarboxylic acids, e.g. sodium benzoate or aluminum tert-butylbenzoate, and
(ii) dibenzylidenesorbitol (e.g. 1,3 : 2,4 dibenzylidenesorbitol) and $C_1$-$C_8$-alkylsubstituted dibenzylidenesorbitol derivatives, such as methyldibenzylidenesorbitol, ethyldibenzylidenesorbitol or dimethyldibenzylidenesorbitol (e.g. 1,3 : 2,4 di(methylbenzylidene) sorbitol), or substituted nonitol-derivatives, such as 1,2,3,-trideoxy-4,6:5,7-bis-O-[(4-propylphenyl)methylene]-nonitol, and
(iii) salts of diesters of phosphoric acid, e.g. sodium 2,2'-methylenebis (4, 6,-di-tert-butylphenyl) phosphate or aluminium-hydroxy-bis[2,2'-methylene-bis(4,6-di-t-butylphenyl)phosphate], and
(iv) vinylcycloalkane polymer and vinylalkane polymer (as discussed in more detail below), and
(v) mixtures thereof.

Such additives are generally commercially available and are described, for example, in "Plastic Additives Handbook", pages 871 to 873, 5th edition, 2001 of Hans Zweifel.

It is understood that the content of additives (A), given with respect to the total weight of the monophasic bimodal propylene/ethylene/1-butene random terpolymer composition (PP), includes any carrier polymers used to introduce the additives to said monophasic bimodal propylene/ethylene/1-butene random terpolymer composition (PP), i.e. masterbatch carrier polymers. An example of such a carrier polymer would be a polypropylene homopolymer in the form of powder.

In one particular embodiment, the monophasic bimodal propylene/ethylene/1-butene random terpolymer composition (PP) consists of the first random terpolymer fraction (PP1), the second random terpolymer fraction (PP2), and optionally additives (A).

## First random terpolymer fraction (PP1)

The first random terpolymer fraction (PP1) is a terpolymer of propylene, ethylene and 1-butene.

The first random terpolymer fraction (PP1) has an ethylene content (C2), as determined by $^{13}$C-NMR spectroscopy, in the range from 0.3 to 3.0 mol-%, more preferably in the range from 0.5 to 2.5 mol-%, most preferably in the range from 1.0 to 2.0 mol.-%.

The first random terpolymer fraction (PP1) has a 1-butene content (C4), as determined by $^{13}$C-NMR spectro-

scopy, in the range from 1.0 to 5.0 mol-%, more preferably in the range from 1.5 to 4.0 mol-%, most preferably in the range from 2.0 to 3.0 mol.-%.

The first random terpolymer fraction (PP1) preferably has a melt flow rate ($MFR_2$), determined according to ISO 1133 at 230 °C at a load of 2.16 kg, in the range from 1.0 to 10 g/10 min, more preferably in the range from 3.0 to 8.0 g/10 min, most preferably in the range from 5.0 to 7.0 g/10 min.

**Second random terpolymer fraction (PP2)**

The second random terpolymer fraction (PP2) is a terpolymer of propylene, ethylene and 1-butene.

The second random terpolymer fraction (PP2) has an ethylene content (C2), as determined by $^{13}$C-NMR spectroscopy, in the range from 3.0 to 7.0 mol-%, more preferably in the range from 3.5 to 6.0 mol-%, most preferably in the range from 4.0 to 5.5 mol.-%.

The second random terpolymer fraction (PP2) has a 1-butene content (C4), as determined by $^{13}$C-NMR spectroscopy, in the range from 2.0 to 6.0 mol-%, more preferably in the range from 2.5 to 5.5 mol-%, most preferably in the range from 3.0 to 5.0 mol.-%.

The second random terpolymer fraction (PP2) preferably has a melt flow rate ($MFR_2$), determined according to ISO 1133 at 230 °C at a load of 2.16 kg, in the range from 1.0 to 20.0 g/10 min, more preferably in the range from 3.0 to 17.0 g/10 min, most preferably in the range from 5.0 to 14.0 g/10 min.

**Properties of the monophasic bimodal propylene/ethylene/1-butene random terpolymer composition (PP)**

The monophasic bimodal propylene/ethylene/1-butene random terpolymer composition (PP) has a melt flow rate ($MFR_2$), determined according to ISO 1133 at 230 °C at a load of 2.16 kg, in the range from 3.0 to 10.0 g/10 min, more preferably in the range from 4.0 to 9.0 g/10 min, most preferably in the range from 5.0 to 8.0 g/10 min.

As mentioned previously, the monophasic bimodal propylene/ethylene/1-butene random terpolymer composition (PP) may be bimodal with respect to molecular weight (as indicated by melt flow rate values). As such, it is preferred that the ratio of the melt flow rate ($MFR_2$) of the monophasic bimodal propylene/ethylene/1-butene random terpolymer composition (PP) to the melt flow rate ($MFR_2$) of the first random terpolymer fraction (PP1), both determined according to ISO 1133 at 230 °C at a load of 2.16 kg and expressed in g/10 min, ([MFR(PP)]/[MFR(PP1)]) is in the range from 0.50 to 1.50, more preferably in the range from 0.80 to 1.30, most preferably in the range from 1.00 to 1.20.

The monophasic bimodal propylene/ethylene/1-butene random terpolymer composition (PP) has an ethylene content (C2), as determined by $^{13}$C-NMR spectroscopy, in the range from 1.0 to 4.0 mol-%, more preferably in the range from 1.5 to 3.7 mol-%, most preferably in the range from 2.0 to 3.5 mol.-%.

The monophasic bimodal propylene/ethylene/1-butene random terpolymer composition (PP) is bimodal with respect to comonomer content, i.e. either bimodal with respect to ethylene content, 1-butene content, or both. Consequently, the ethylene content of the first random terpolymer fraction, C2(PP1), differs from ethylene content of the second random terpolymer fraction, C2(PP2), and/or the 1-butene content of the first random terpolymer fraction, C4(PP1), differs from the 1-butene content of the second random terpolymer fraction, C4(PP2).

As mentioned previously, the monophasic bimodal propylene/ethylene/1-butene random terpolymer composition (PP) may be bimodal with respect to ethylene content. As such, it is preferred that the ratio of the ethylene content of the monophasic bimodal propylene/ethylene/1-butene random terpolymer composition (PP) to the ethylene content of the first random terpolymer fraction (PP1), both determined by quantitative $^{13}$C-NMR spectroscopy and expressed in mol-%, ([C2(PP)]/[C2(PP1)]) is in the range from 1.00 to 4.00, more preferably in the range from 1.10 to 3.00, most preferably in the range from 1.20 to 2.50.

The monophasic bimodal propylene/ethylene/1-butene random terpolymer composition (PP) has a 1-butene content (C4), as determined by $^{13}$C-NMR spectroscopy, in the range from 2.0 to 6.0 mol-%, more preferably in the range from 2.5 to 5.5 mol-%, most preferably in the range from 3.0 to 5.0 mol.-%.

As mentioned previously, the monophasic bimodal propylene/ethylene/1-butene random terpolymer composition (PP) may be bimodal with respect to 1-butene content. As such, it is preferred that ratio of the 1-butene content of the monophasic bimodal propylene/ethylene/1-butene random terpolymer composition (PP) to the 1-butene content of the first random terpolymer fraction (PP1), both determined by quantitative $^{13}$C-NMR spectroscopy and expressed in mol-%, ([C2(PP)]/[C2(PP1)]) is in the range from 1.00 to 2.00, more preferably in the range from 1.05 to 1.50, most preferably in the range from 1.10 to 1.30.

The presence of 2,1-regiodefects in the monophasic bimodal propylene/ethylene/1-butene random terpolymer composition (PP) is indicative that the random propylene copolymer (R-PP) has been polymerized in the presence of a single site catalyst (SSC).

It is therefore also preferred that the monophasic bimodal propylene/ethylene/1-butene random terpolymer composition (PP) has been polymerized in the presence of a single site catalyst (SSC), more preferably a metallocene

catalyst.

The monophasic bimodal propylene/ethylene/1-butene random terpolymer composition (PP) further has a content of 2,1-regiodefects, as determined by quantitative $^{13}C$-NMR spectroscopy analysis, in the range from 0.10 to 1.50 mol%, more preferably in the range from 0.15 to 1.00 mol%, most preferably in the range from 0.20 to 0.80 mol%.

The content of 2,1-regiodefects may be dependent on the amount of comonomer, with higher amounts of comonomers often associated with lower content of 2,1-regiodefects.

The content of 2,1-regiodefects may also be dependent on the polymerization temperature, with higher temperatures often associated with lower content of 2,1-regiodefects.

The monophasic bimodal propylene/ethylene/1-butene random terpolymer composition (PP) preferably has a xylene cold soluble content (XCS), as determined according to ISO 16152, in the range from 1.00 to 4.00 wt.-%, more preferably in the range from 1.5 to 3.5 wt.-%, most preferably in the range from 1.80 to 3.00 wt.-%.

The monophasic bimodal propylene/ethylene/1-butene random terpolymer composition (PP) preferably has a hexane soluble fraction according to the FDA method ($C6_{FDA}$) in the range from 0.00 to 1.00 wt.-%, more preferably in the range from 0.00 to 0.80 wt.-%, most preferably in the range from 0.00 to 0.70 wt.-%.

It is further preferred that the monophasic bimodal propylene/ethylene/1-butene random terpolymer composition (PP) has ratio between the hexane soluble fraction according to the FDA method ($C6_{FDA}$) and the xylene cold soluble content (XCS), as determined according to ISO 16152, ($[C6_{FDA}]/[XCS]$) in the range from 0.10 to 0.70, more preferably in the range from 0.15 to 0.50, most preferably in the range from 0.20 to 0.40.

As the monophasic bimodal propylene/ethylene/1-butene random terpolymer composition (PP) is not a heterophasic system comprising an elastomeric rubber layer, the bimodal propylene/ethylene/1-butene random terpolymer composition (PP) preferably does not have a glass transition temperature below -30 °C, more preferably does not have a glass transition temperature below -25 °C, most preferably does not have a glass transition temperature below -20 °C.

It is preferred that the monophasic bimodal propylene/ethylene/1-butene random terpolymer composition (PP) has a melting temperature, determined according to DSC analysis, in the range from 120 to 140 °C, more preferably in the range from 125 to 135 °C, most preferably in the range from 127 to 133 °C.

It is preferred that this melting temperature has an associated enthalpy of fusion, determined according to DSC analysis, in the range from 50 to 80 J/g, more preferably in the range from 60 to 77 J/g, most preferably in the range from 65 to 75 J/g.

It is also preferred that the monophasic bimodal propylene/ethylene/1-butene random terpolymer composition (PP) has a crystallization temperature, determined according to DSC analysis, in the range from 88 to 97 °C, more preferably in the range from 89 to 96 °C, most preferably in the range from 90 to 95 °C.

It is preferred that the monophasic bimodal propylene/ethylene/1-butene random terpolymer composition (PP) has at least one of a number of properties typically used to characterize films, determined on 50 μm cast films produced from the monophasic bimodal propylene/ethylene/1-butene random terpolymer composition (PP).

As such, it is preferred that the monophasic bimodal propylene/ethylene/1-butene random terpolymer composition (PP) has a sealing initiation temperature (SIT), measured on a 50 μm cast film sample, in the range from 100 to 115 °C, more preferably in the range from 101 to 110 °C, most preferably in the range from 102 to 108 °C.

It is preferred that the monophasic bimodal propylene/ethylene/1-butene random terpolymer composition (PP) has a Hot Tack force, determined according to ASTM F1921 -12 - Method B on a 50 μm cast film sample, in the range from 2.0 to 5.0 N, more preferably in the range from 2.5 to 4.5 N, most preferably in the range from 3.0 to 4.0 N.

It is also preferred that the monophasic bimodal propylene/ethylene/1-butene random terpolymer composition (PP) has a tensile modulus in the machine direction (MD), measured according to ISO 527-3 on a 50 μm cast film sample, in the range from 300 to 700 MPa, more preferably in the range from 400 to 650 MPa, most preferably in the range from 450 to 600 MPa.

It is further preferred that the monophasic bimodal propylene/ethylene/1-butene random terpolymer composition (PP) has a haze value, determined according to ASTM D1003 on a 50 μm cast film sample, in the range from 0.0 to 3.0%, more preferably in the range from 0.0 to 2.5%, most preferably in the range from 0.0 to 2.0%.

It is preferred that the monophasic bimodal propylene/ethylene/1-butene random terpolymer composition (PP) has a clarity value, determined according to ASTM D1003 on a 50 μm cast film sample, in the range from 90 to 100%, more preferably in the range from 92 to 100%, most preferably in the range from 94 to 100%.

**Process**

The present invention is further directed to a process for producing the monophasic bimodal propylene/ethylene/1-butene random terpolymer composition (PP) according to the present invention.

Said process comprises the steps of:

a) polymerizing propylene, ethylene and 1-butene comonomer units in a first polymerization reactor (R1) in the

presence of a single-site catalyst to produce a first polymerization mixture comprising the first random terpolymer fraction (PP1) and the single-site catalyst, wherein the first polymerization reactor (R1) is preferably a slurry reactor (SR), more preferably a loop reactor (LR);

b) transferring the first polymerization mixture into a second polymerization reactor (R2), preferably a gas phase reactor (GPR);

c) polymerizing propylene, ethylene and 1-butene comonomer units in said second polymerization reactor (R2) in the presence of said single-site catalyst to produce a second polymerization mixture comprising the first random terpolymer fraction (PP1), the second random terpolymer fraction (PP2) and the single-site catalyst;

d) withdrawing said second polymerization mixture from said second polymerization reactor (R2); and

e) compounding said second polymerization mixture optionally with the addition of additives to form the monophasic bimodal propylene/ethylene/1-butene random terpolymer composition (PP).

It is preferred that the operating temperature in the first polymerization reactor (R1) is in the range from 62 to 85 °C, more preferably in the range from 65 to 82 °C, still more preferably in the range from 67 to 80 °C.

Alternatively or additionally to the previous paragraph it is preferred that the operating temperature in the second polymerization reactor (R2) is in the range from 75 to 95 °C, more preferably in the range from 78 to 92 °C.

Typically, the pressure in the first polymerization reactor (R1), preferably in the loop reactor (LR), is in the range from 20 to 80 bar, preferably 30 to 70 bar, like 35 to 65 bar, whereas the pressure in the second polymerization reactor (R2), i.e. in the gas phase reactor (GPR), is in the range from 5 to 50 bar, preferably 15 to 40 bar.

Preferably hydrogen is added in each polymerization reactor in order to control the molecular weight, i.e. the melt flow rate $MFR_2$.

The preparation of the propylene random terpolymer can comprise in addition to the (main) polymerization of the propylene random terpolymer in the at two polymerization reactors (R1 and R2) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the single site catalyst (SSC). According to this embodiment, the single site catalyst is introduced to the pre-polymerization step. However, this shall not exclude the option that at a later stage for instance further co-catalyst is added in the polymerization process, for instance in the first reactor (R1). In one embodiment, all components of the single site catalyst are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the single site catalyst (SSC) and the polypropylene (Pre-PP) produced in the pre-polymerization reactor (PR) is obtained. Preferably the single site catalyst (SSC) is (finely) dispersed in the polypropylene (Pre-PP). In other words, the single site catalyst (SSC) particles introduced in the pre-polymerization reactor (PR) are split into smaller fragments that are evenly distributed within the growing polypropylene (Pre-PP). The sizes of the introduced single site catalyst (SSC) particles as well as of the obtained fragments are not of essential relevance for the instant invention and within the skilled knowledge.

As mentioned above, if a pre-polymerization is used, subsequent to said pre-polymerization, the mixture (MI) of the single site catalyst (SSC) and the polypropylene (Pre-PP) produced in the pre-polymerization reactor (PR) is transferred to the first reactor (R1). Typically the total amount of the polypropylene (Pre-PP) in the final bimodal propylene terpolymer (PP) is rather low and typically not more than 5.0 wt.-%, more preferably not more than 4.0 wt.-%, still more preferably in the range from 0.5 to 4.0 wt.-%, like in the range 1.0 of to 3.0 wt.-%.

In case that pre-polymerization is not used, propylene and the other ingredients such as the single site catalyst (SSC) are directly introduced into the first polymerization reactor (R1).

In one embodiment, the present invention is directed to a monophasic bimodal propylene/ethylene/1-butene random terpolymer composition (PP) as described above that is obtainable, more preferably obtained, through the process as described herein. All preferable embodiments and fall back positions given for the monophasic bimodal propylene/ethylene/1-butene random terpolymer composition (PP) above and below apply mutatis mutandis to the

**Catalyst system**

The single site catalyst according to the present invention may be any supported metallocene catalyst suitable for the production of isotactic polypropylene.

It is preferred that the single site catalyst (SSC) comprises a metallocene complex, a co-catalyst system comprising a boron-containing co-catalyst and/or aluminoxane co-catalyst, and a silica support.

In particular, it is preferred that the single site catalyst (SSC) comprises

(i) a metallocene complex of the general formula (I)

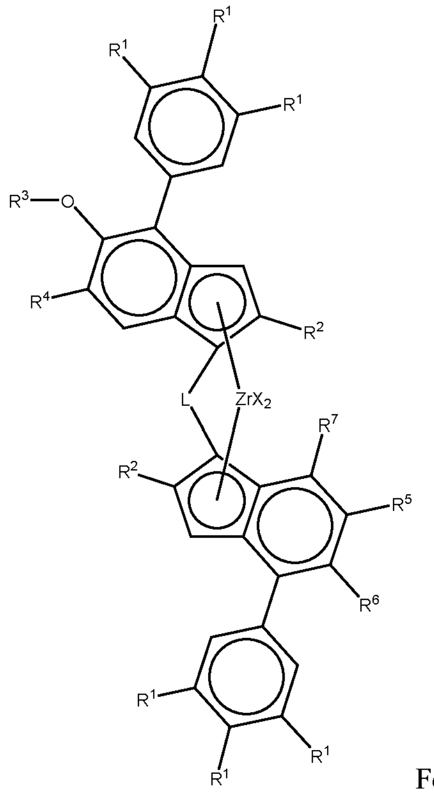

Formula (I)

wherein each X independently is a sigma-donor ligand,

L is a divalent bridge selected from -R'$_2$C-, -R'$_2$C-CR'$_2$-, -R'$_2$Si-, -R'$_2$Si-SiR'$_2$-, - R'$_2$Ge-, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,

each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,

each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,

$R^4$ is a $C(R^9)_3$ group, with $R^9$ being a linear or branched $C_1$-$C_6$-alkyl group,

$R^5$ is hydrogen or an aliphatic $C_1$-$C_{20}$-hydrocarbyl group optionally containing one or more heteroatoms from groups 14-16 of the periodic table;

$R^6$ is hydrogen or an aliphatic $C_1$-$C_{20}$-hydrocarbyl group optionally containing one or more heteroatoms from groups 14-16 of the periodic table; or

$R^5$ and $R^6$ can be taken together to form a 5 membered saturated carbon ring which is optionally substituted by n groups $R^{10}$, n being from 0 to 4;

each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;

$R^7$ is H or a linear or branched $C_1$-$C_6$-alkyl group or an aryl or heteroaryl group having 6 to 20 carbon atoms

optionally substituted by one to three groups $R^{11}$,
each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) a co-catalyst system comprising a boron containing co-catalyst and/or an aluminoxane co-catalyst, and
(iii) a silica support.

The term "sigma-donor ligand" is well understood by the person skilled in the art, i.e. a group bound to the metal via a sigma bond. Thus the anionic ligands "X" can independently be halogen or be selected from the group consisting of R', OR', $SiR'_3$, $OSiR'_3$, $OSO_2CF_3$, OCOR', SR', $NR'_2$ or $PR'_2$ group wherein R' is independently hydrogen, a linear or branched, cyclic or acyclic, $C_1$ to $C_{20}$ alkyl, $C_2$ to $C_{20}$ alkenyl, $C_2$ to $C_{20}$ alkynyl, $C_3$ to $C_{12}$ cycloalkyl, $C_6$ to $C_{20}$ aryl, $C_7$ to $C_{20}$ arylalkyl, $C_7$ to $C_{20}$ alkylaryl, $C_8$ to $C_{20}$ arylalkenyl, in which the R' group can optionally contain one or more heteroatoms belonging to groups 14 to 16. In a preferred embodiment the anionic ligands "X" are identical and either halogen, like Cl, or methyl or benzyl.
A preferred monovalent anionic ligand is halogen, in particular chlorine (Cl).
Preferred complexes of the metallocene catalyst include:

rac-dimethylsilanediylbis[2-methyl-4-(3',5'-dimethylphenyl)-5-methoxy-6-tert-butylinden-1- yl] zirconium dichloride,
rac-anti-dimethylsilanediyl[2-methyl-4-(4'-tert-butylphenyl)-inden-1-yl][2-methyl-4-(4'-tertbutylphenyl)-5-methoxy-6-tert-butylinden-1-yl] zirconium dichloride,
rac-anti-dimethylsilanediyl[2-methyl-4-(4'-tert-butylphenyl)-inden-1-yl][2-methyl-4-phenyl-5-methoxy-6-tert-butylinden-1-yl] zirconium dichloride,
rac-anti-dimethylsilanediyl[2-methyl-4-(3',5'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(4'-tert-butylphenyl)-1,5,6,7-tetrahydro-sindacen-1-yl][2-methyl-4-(3',5'-dimethyl-phenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl] [2-methyl-4-(3',5'-dimethylphenyl)-5-methoxy-6-tert-butylinden-1-yl] zirconium dichloride,
rac-anti-dimethylsilanediyl[2-methyl-4,8-bis-(3',5'-dimethylphenyl)-1,5,6,7-tetrahydro-s-indacen-1-yl][2-methyl-4-(3',5'-5 ditert-butyl-phenyl)-5-methoxy-6-tert-butylinden-1-yl] zirconium dichloride.

Especially preferred is rac-anti-dimethylsilanediyl[2-methyl-4,8-bis-(3',5'-dimethylphenyl)-1,5,6,7-tetrahydro-s indacen-1-yl] [2-methyl-4-(3',5'-dimethylphenyl)-5-methoxy-6-tert-butylinden-1-yl] zirconium dichloride.
The ligands required to form the complexes and hence catalysts of the invention can be synthesised by any process and the skilled organic chemist would be able to devise various synthetic protocols for the manufacture of the necessary ligand materials. For Example WO2007/116034 discloses the necessary chemistry. Synthetic protocols can also generally be found in WO 2002/02576, WO 2011/135004, WO 2012/084961, WO 2012/001052, WO 2011/076780, WO 2015/158790 and WO 2018/122134. Especially reference is made to WO 2019/179959, in which the most preferred catalyst of the present invention is described.

**Cocatalyst**

To form an active catalytic species it is normally necessary to employ a cocatalyst as is well known in the art.
According to the present invention a co-catalyst system comprising a boron containing co-catalyst and/or an aluminoxane co-catalyst is used in combination with the above defined metallocene catalyst complex.
The aluminoxane co-catalyst can be one of formula (II):

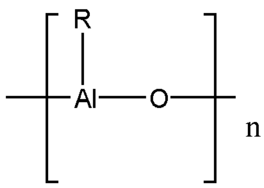

(II)

where n is usually from 6 to 20 and R has the meaning below.
Aluminoxanes are formed on partial hydrolysis of organoaluminum compounds, for example those of the formula

$AlR_3$, $AlR_2Y$ and $Al_2R_3Y_3$ where R can be, for example, $C_1$-$C_{10}$ alkyl, preferably $C_1$-$C_5$ alkyl, or $C_3$-$C_{10}$ cycloalkyl, $C_7$-$C_{12}$ arylalkyl or alkylaryl and/or phenyl or naphthyl, and where Y can be hydrogen, halogen, preferably chlorine or bromine, or $C_1$-$C_{10}$ alkoxy, preferably methoxy or ethoxy. The resulting oxygen-containing aluminoxanes are not in general pure compounds but mixtures of oligomers of the formula (II).

The preferred aluminoxane is methylaluminoxane (MAO). Since the aluminoxanes used as co-catalysts according to the invention are not, owing to their mode of preparation, pure compounds, the molarity of aluminoxane solutions hereinafter is based on their aluminium content.

According to the present invention, also a boron containing co-catalyst can be used instead of the aluminoxane co-catalyst or the aluminoxane co-catalyst can be used in combination with a boron containing co-catalyst.

It will be appreciated by the person skilled in the art that where boron based co-catalysts are employed, it is normal to pre-alkylate the complex by reaction thereof with an aluminium alkyl compound, such as TIBA. This procedure is well known and any suitable aluminium alkyl, e.g. $Al(C_1$-$C_6$ alkyl$)_3$ can be used. Preferred aluminium alkyl compounds are triethylaluminium, tri-isobutylaluminium, tri-isohexylaluminium, tri-n-octylaluminium and tri-isooctylaluminium.

Alternatively, when a borate co-catalyst is used, the metallocene catalyst complex is in its alkylated version, that is for example a dimethyl or dibenzyl metallocene catalyst complex can be used.

Boron based co-catalysts of interest include those of formula (III)

$$BY_3 \qquad (III)$$

wherein Y is the same or different and is a hydrogen atom, an alkyl group of from 1 to about 20 carbon atoms, an aryl group of from 6 to about 15 carbon atoms, alkylaryl, arylalkyl, haloalkyl or haloaryl each having from 1 to 10 carbon atoms in the alkyl radical and from 6-20 carbon atoms in the aryl radical or fluorine, chlorine, bromine or iodine. Preferred options are trifluoroborane, triphenylborane, tris(4-fluorophenyl)borane, tris(3,5-difluorophenyl)borane, tris(4-fluoromethylphenyl) borane, tris(2,4,6-trifluorophenyl)borane, tris(penta-fluorophenyl)borane, tris(tolyl)borane, tris(3,5-dimethyl-phenyl)borane, tris(3,5-difluorophenyl)borane and/or tris (3,4,5-trifluorophenyl)borane.

Particular preference is given to tris(pentafluorophenyl)borane.

However it is preferred that borates are used, i.e. compounds containing a borate 3+ ion. Such ionic co-catalysts preferably contain a non-coordinating anion such as tetrakis(pentafluorophenyl)borate and tetraphenylborate. Suitable counterions are protonated amine or aniline derivatives such as methylammonium, anilinium, dimethylammonium, diethylammonium, N- methylanilinium, diphenylammonium, N,N-dimethylanilinium, trimethylammonium, triethylammonium, tri-n-butylammonium, methyldiphenylammonium, pyridinium, p-bromo-N,N- dimethylanilinium or p-nitro-N,N-dimethylanilinium.

It has been surprisingly found that certain boron co-catalysts are especially preferred. Preferred borates of use in the invention therefore comprise the trityl ion. Thus the use of N,N-dimethylammonium-tetrakispentafluorophenylborate and $Ph_3CB(PhF_5)_4$ and analogues therefore are especially favoured.

The preferred co-catalysts are aluminoxanes, more preferably methylaluminoxanes, combinations of aluminoxanes with Al-alkyls, boron or borate co-catalysts, and combination of aluminoxanes with boron-based co-catalysts.

The catalyst system of the invention is used in supported form. The particulate support material used is silica or a mixed oxide such as silica-alumina, in particular silica. The use of a silica support is preferred. The skilled practitioner is aware of the procedures required to support a metallocene catalyst.

In a preferred embodiment, the catalyst system corresponds to the ICS3 of WO 2020/239598 A1.

## Article

In a final embodiment, the present invention is directed to an article comprising the monophasic bimodal propylene/ethylene/1-butene random terpolymer composition (PP) in an amount of at least 75 wt.-%, more preferably at least 90 wt.-%, most preferably at least 95 wt.-%.

Other polymeric components in addition to the monophasic bimodal propylene/ethylene/1-butene random terpolymer composition (PP) can be present in the article; however, it is preferred that the monophasic bimodal propylene/ethylene/1-butene random terpolymer composition (PP) is the only polymeric component in the article.

In one particularly preferred embodiment, the article consists of the monophasic bimodal propylene/ethylene/1-butene random terpolymer composition (PP).

The article according to the present invention is preferably a film, more preferably a cast film.

It is preferred that the film, more preferably the cast film, has a thickness in the range from 5 to 100 μm, more preferably in the range from 10 to 80 μm, most preferably in the range from 20 to 70 μm.

The film, more preferably the cast film, according to the present invention preferably has a sealing initiation temperature (SIT) in the range from 100 to 115 °C, more preferably in the range from 101 to 110 °C, most preferably in the range from 102 to 108 °C.

The film, more preferably the cast film, according to the present invention preferably has a Hot Tack force, determined according to ASTM F1921 -12 - Method B, in the range from 2.0 to 5.0 N, more preferably in the range from 2.5 to 4.5 N, most preferably in the range from 3.0 to 4.0 N.

The film, more preferably the cast film, according to the present invention preferably has a tensile modulus in the machine direction (MD), measured according to ISO 527-3, in the range from 300 to 700 MPa, more preferably in the range from 400 to 650 MPa, most preferably in the range from 450 to 600 MPa.

The film, more preferably the cast film, according to the present invention preferably has a haze value, determined according to ASTM D1003, in the range from 0.0 to 3.0%, more preferably in the range from 0.0 to 2.5%, most preferably in the range from 0.0 to 2.0%.

The film, more preferably the cast film, according to the present invention preferably has a clarity value, determined according to ASTM D1003, in the range from 90 to 100%, more preferably in the range from 92 to 100%, most preferably in the range from 94 to 100%.

The film, more preferably the cast film, may be a monolayer film. Alternatively, the film, more preferably the cast film, may be present as a single layer in a multilayer film.

When the film is present as a single layer in a multilayer film the film can be produced by any means known in the art. It is preferred that the multilayers films are prepared by means of cast film co-extrusion.

## EXAMPLES

### A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 180°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilising the NOE at short recycle delays of 3 s {pollard04, klimke06} and the RS-HEPT decoupling scheme {fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the methyl isotactic pentad (*mmmm*) at 21.85 ppm.

Characteristic signals corresponding to the incorporation of 1-butene were observed {brandolini01} and the comonomer content quantified.

The amount of isolated 1-butene incorporated in PBP sequences was quantified using the integral of the αB2 sites at 43.6 ppm accounting for the number of reporting sites per comonomer:

$$B = I_{\alpha B2} / 2$$

The amount of consecutively incorporated 1-butene in PBBP sequences was quantified using the integral of the ααB2B2 site at 40.5 ppm accounting for the number of reporting sites per comonomer:

$$BB = 2 * I_{\alpha\alpha B2B2}$$

In presence of BB the value of B must be corrected for the influence of the αB2 sites resulting from BB:

$$B = (I_{\alpha B2} / 2) - BB/2$$

The total 1-butene content was calculated based on the sum of isolated and consecutively incorporated 1-butene:

$$B_{total} = B + BB$$

Characteristic signals corresponding to the incorporation of ethylene were observed {brandolini01} and the comonomer content quantified.

The amount of isolated ethylene incorporated in PEP sequences was quantified using the integral of the Sββ sites at 24.3 ppm accounting for the number of reporting sites per comonomer:

$$E = I_{S\beta\beta}$$

If characteristic signals corresponding to consecutive incorporation of ethylene in PEE sequence was observed the Sβδ site at 27.0 ppm was used for quantification:

$$EE = I_{S\beta\delta}$$

Characteristic signals corresponding to regio defects were observed {resconi00}. The presence of isolated 2,1-erythro regio defects was indicated by the presence of the two methyl sites at 17.7 and 17.2 ppm, by the methylene site at 42.4 ppm and confirmed by other characteristic sites. The presence of 2,1 regio defect adjacent an ethylene unit was indicated by the two inequivalent Sαβ signals at 34.8 ppm and 34.4 ppm respectively and the Tγγ at 33.7 ppm.

The amount of isolated 2,1-erythro regio defects ($P_{21e\ isolated}$) was quantified using the integral of the methylene site at 42.4 ppm ($I_{e9}$):

$$P_{21e\ isolated} = I_{e9}$$

If present the amount of 2,1 regio defect adjacent to ethylene ($P_{E21}$) was quantified using the methine site at 33.7 ppm ($I_{T\gamma\gamma}$):

$$P_{E21} = I_{T\gamma\gamma}$$

The total ethylene content was then calculated based on the sum of ethylene from isolated, consecutively incorporated and adjacent to 2,1 regio defects:

$$E_{total} = E + EE + P_{E21}$$

The amount of propene was quantified based on the Sαα methylene sites at 46.7 ppm including all additional propene units not covered by Sαα e.g. the factor $3*P_{21e\ isolated}$ accounts for the three missing propene units from isolated 2,1-erythro regio defects:

$$P_{total} = I_{S\alpha\alpha} + 3*P_{21e\ isolated} + B + 0.5*BB + E + 0.5*EE + 2*P_{E21}$$

The total mole fraction of 1-butene and ethylene in the polymer was then calculated as:

$$fB = B_{total} / ( E_{total} + P_{total} + B_{total} )$$

$$fE = E_{total} / ( E_{total} + P_{total} + B_{total} )$$

The mole percent comonomer incorporation was calculated from the mole fractions:

$$B\ [mol\%] = 100 * fB$$

$$E\ [mol\%] = 100 * fE$$

The weight percent comonomer incorporation was calculated from the mole fractions:

$$B\ [wt.\text{-}\%] = 100 * ( fB * 56.11 ) / ( (fE * 28.05) + (fB * 56.11) + ((1-(fE+fB)) * 42.08) )$$

$$E\ [wt.\text{-}\%] = 100 * ( fE * 28.05 ) / ( (fE * 28.05) + (fB * 56.11) + ((1-(fE+fB)) * 42.08) )$$

The mole percent of isolated 2,1-erythro regio defects was quantified with respect to all propene:

$$[21e]\ mol\% = 100 * P_{21e\ isolated} / P_{total}$$

The mole percent of 2,1 regio defects adjacent to ethylene was quantified with respect to all propene:

$$[E21]\ mol\% = 100 * P_{E21} / P_{total}$$

The total amount of 2,1 defects was quantified as following:

$$[21]\ mol\% = [21e] + [E21]$$

Characteristic signals corresponding to other types of regio defects (2,1-threo, 3,1 insertion) were not observed {resconi00}.

Literature (as referred to above):


| | |
|---|---|
| klimke06 | Klimke, K., Parkinson, M., Piel, C., Kaminsky, W., Spiess, H.W., Wilhelm, M., Macromol. Chem. Phys. 2006;207:382. |
| parkinson07 | Parkinson, M., Klimke, K., Spiess, H.W., Wilhelm, M., Macromol. Chem. Phys. 2007;208:2128. |
| pollard04 | Pollard, M., Klimke, K., Graf, R., Spiess, H.W., Wilhelm, M., Sperber, O., Piel, C., Kaminsky, W., Macromolecules 2004;37:813. |
| filip05 | Filip, X., Tripon, C., Filip, C., J. Mag. Resn. 2005, 176, 239 |
| griffin07 | Griffin, J.M., Tripon, C., Samoson, A., Filip, C., and Brown, S.P., Mag. Res. in Chem. 2007 45, S1, S198. |
| castignolles09 | Castignolles, P., Graf, R., Parkinson, M., Wilhelm, M., Gaborieau, M., Polymer 50 (2009) 2373. |
| resconi00 | Resconi, L., Cavallo, L., Fait, A., Piemontesi, F., Chem. Rev. 2000, 100, 1253. |
| brandolini01 | A.J. Brandolini, D.D. Hills, "NMR spectra of polymers and polymer additives", Marcel Deker Inc., 2000 |


**Calculation** of comonomer content of the second random terpolymer fraction (PP2):

$$\frac{C(PP) - w(PP1) x\, C(PP1)}{w(PP2)} = C(PP2) \quad (I)$$

wherein

- w(PP1) is the weight fraction [in wt.-%] of the first random terpolymer fraction (PP1),
- w(PP2) is the weight fraction [in wt.-%] of second random terpolymer fraction (PP2),
- C(PP1) is the comonomer content [in mol-%] of the first random terpolymer fraction (PP1),
- C(PP) is the comonomer content [in mol-%] of the monophasic bimodal propylene/ethylene/1-butene random terpolymer composition (PP),
- C(PP2) is the calculated comonomer content [in mol-%] of the second random terpolymer fraction (R-PP2).

**Melt Flow Rate**

The melt flow rate (MFR) is determined according to ISO 1133 and is indicated in g/10 min.

The MFR is an indication of the flowability, and hence the processability, of the polymer.

The higher the melt flow rate, the lower the viscosity of the polymer. The $MFR_2$ of polypropylene is determined at a temperature of 230 °C and a load of 2.16 kg.

**Calculation** of melt flow rate $MFR_2$ (230 °C) of the second random terpolymer fraction (PP2):

$$MFR(PP2) = 10^{\left[\frac{\log(MFR(PP)) - w(PP1)\ x\ \log(MFR(PP1))}{w(PP2)}\right]} \quad (II)$$

wherein

w(PP1) is the weight fraction [in wt.-%] of the first random terpolymer fraction (PP1),
w(PP2) is the weight fraction [in wt.-%] of second random terpolymer fraction (PP2),
MFR(PP1) is the melt flow rate $MFR_2$ (230 °C) [in g/10min] of the first random terpolymer fraction (PP1),
MFR(PP) is the melt flow rate $MFR_2$ (230 °C) [in g/10min] of the monophasic bimodal propylene/ethylene/1-butene random terpolymer composition (PP),
MFR(PP2) is the calculated melt flow rate $MFR_2$ (230 °C) [in g/10min] of the second random terpolymer fraction (PP2).

**The xylene soluble fraction at room temperature (XCS, wt.-%):** The amount of the polymer soluble in xylene is determined at 25 °C according to ISO 16152; 5th edition; 2005-07-01.

**DSC analysis, melting temperature ($T_m$) and heat of fusion ($H_f$), crystallization temperature ($T_c$) and heat of crystallization ($H_c$):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature ($T_c$) and heat of crystallization ($H_c$) are determined from the cooling step, while melting temperature ($T_m$) and heat of fusion ($H_f$) are determined from the second heating step.

**The glass transition temperature Tg** is determined by dynamic mechanical analysis according to ISO 6721-7. The measurements are done in torsion mode on compression moulded samples (40x10x1 $mm^3$) between -100 °C and +150 °C with a heating rate of 2 °C/min and a frequency of 1 Hz.

**Hexane soluble fraction (C6 FDA),** the amount of hexane extractable polymer according to FDA method (federal registration, title 21, Chapter 1, part 177, section 1520, s. Annex B) was determined from films. The film was produced on a Collin 30 lab scale cast film line, with melt temperature of 250°C, chrill roll at 40°C, and film thickness 100 μm.

The amount of hexane soluble polymer is determined according to FDA method (federal registration, title 21, Chapter 1, part 177, section 1520, s. Annex B) from the film samples prepared as described above. The extraction was performed at a temperature of 50 °C and an extraction time of 2 hours.

**Haze and clarity** are determined according to ASTM D1003 on cast films with a thickness of 50 μm produced as indicated below.

**Tensile Modulus** in both the machine (MD) and transvers (TD) directions was determined according to ISO 527-3 at 23 °C on cast films of 50 μm thickness produced on a monolayer cast film line with a melt temperature of 220 °C and a chill roll temperature of 20 °C as indicated below. Testing was performed at a cross head speed of 1 mm/min up to the yield limit and at 10 mm/min up to specimen breakage.

**Hot Tack Force** was determined according to a modified method based on ASTM F1921 - 12 - Method B on a J&B Hot-Tack Tester on a 50 μm thickness film produced on a monolayer cast film line at a melt temperature of 220 °C and a chill roll temperature of 20 °C.

Specimen cutter:

A rotary drum cutter or a strip cutter is used to cut the specimens to a width of 25 mm (± 0,5 %).

Testing machine:

- Seal bar length: 50 mm
- Seal bar width: 5 mm
- Seal bar shape: flat
- Seal bar material: brass - nickel
- Coating of sealing bars: NIPTEF®
- Roughness of sealing bars: approx. 1 μm
- Force measurement: Piezo electric force transducer
- Temperature measurement: 2 separate heating systems

Thickness-measuring device: (accuracies according to ISO 4593:1993)

- Positionsanzeige (Heidenhain; Type: ND 280)
- Messtaster (Heidenhain; Type: MT 1281)

Measuring surfaces: plane/plane polished

Diameter of each face: 6,5 mm

Conditioning of samples / test specimens:

All test specimens have to be prepared in standard atmospheres for conditioning and testing at 23 °C (± 2 °C) and 50 % (± 10 %) relative humidity.
Minimum conditioning time of test specimen in standard atmosphere before start testing: > 16 h.
Minimum storage time between extrusion of film sample and start testing: > 88 h.

Specimen preparation:

Specimen type: parallel cut stripes with 25 mm (width) x approx. 320 mm (length) taken over the whole width of sample.

Specimen orientation: Machine direction
Specimens (films) shall be free from dust, fingerprints, wrinkles, folds, shrivelling or other obvious imperfections. The edges of cut specimens shall be smooth and free from notches.

Thickness measurement:

The thickness of the test specimen is measured in the sealing area.

Hot tack - sealing process:

The test shall be carried out in the same atmospheric conditions as the conditioning.
The prepared specimen strip is sealed by applying pressure from two flat heated seal jaws (NIPTEF®, 5*50mm) under defined conditions of temperature, contact time and pressure.
The specimen is folded between the sealing jaws with an automatic specimen folding device.
Sealing jaws close and after the pre-set sealing time elapsed, the sealing jaws open and the heat seal is complete. The selected cooling time elapses and the lower sample clamp moves down. During pulling the specimen the force transducer, attached to the upper sample clamp, measures the force. Afterwards the failure mode is determined visually.

**Standard test conditions:**

- **Sealing temperature (ambient - 240°C)**
- **Sealing time (thickness < 25μm: 0,5 s; thickness ≥ 25μm: 1 s)**
- **Sealing pressure (0.15 N/mm$^2$)**
- **Delay time (0.2 s)**
- **Clamp separation rate (200mm/s)**

Note: The values of the parameters are freely user-selectable

Number of test specimens: at least 3 specimens per temperature

In case the measured values at one temperature step show significant deviation make sure it is only an outlier and test one futher specimen (the number of specimen should always be uneven but the total should not exceed 7 tested specimen), the outlier is allowed to be eliminated from the measurement - deviation caused by other reasons must be considered

Temperature steps/interval: 5°C ↑
(2 °C ↑ in case of sharp increase / decrease between two temperature steps)
Start measuring at two temperature steps below 0,2 - 0,3 N.

Stop measuring at failure mode burnthrough
It is also allowed to have one failure mode with burnthrough and two other failure modes - plus one additional temperature step

A typical hot tack curve may require 25 to 50 specimens of each material.

Results:

The output of this method is a hot tack curve. The interpretation of hot tack curves has always rested on the relationship between sealing force and sealing temperature.
Hot Tack: highest force with failure mode "peel". Also allowed are two "peel" failure modes and any other failure mode (except burnthrough failure mode) when 3 specimens / temperature step are used.
Deviating from ASTM F1921 - 12 Chapter 9, the test is performed after a cooling time of 200 ms. The end of the measurement described in chapter 9.8 of ASTM F1921 - 12 (test stop after determination of the Hot Tack) is not considered. End of test is after thermal failure of the film. In addition to failure mode evaluations described in the standard, additional failure modes are used.

**Sealing Initiation Temperature (SIT)**

This method is used to determine the sealing window (sealing temperature range) of films. The procedure is similar to hot tack measurement, but in contrast to hot tack the sealing range applies to the strength of the seal after it had cooled (delay time of 30 s).

$$\text{Sealing range} = (\text{Seal initiation temperature until Seal end temperature})$$

The determined results give the user a quantitatively useful indication of the strength of the sealed films and show the temperature range for optimal sealing.
The temperature interval is set by default to 5° C, but can be reduced to 1 ° C when the curve shows a sharp increase or decrease in the force values between two temperature steps in order to represent a better curve profile.
Deviating from ASTM F1921 - 12, the test parameters sealing pressure, cooling time and test speed are modified. The determination of the force/temperature curve is continued until thermal failure of the film. In addition to failure mode evaluations described in the standard, additional failure modes are used.
To characterize the material, the measured values sealing range start temperature (SIT), temperature at max. force (MAX) and sealing range end temperature (SET) are also determined.

Standard conditions:

Conditioning time: > 96 h
Sealing jaws dimension: 50x5 mm
Sealing jaws shape: flat
Sealing jaws coating: Niptef
Sealing temperature: ambient - 240°C
Sealing temperature interval: 5 °C
Sealing time: 1 sec
Delay time: 30 sec
Sealing pressure: 0,4 N/mm$^2$ (PE); 0,67 N/mm$^2$ (PP)
Grip separation rate: 42 mm/sec
Sealing initiation force: 5 N
Sample width: 25 mm

Results:

The output of this method is a sealing curve.
The lower limit (Sealing Initiation Temperature - SIT) is the sealing temperature at which a sealing force of ≥ 5 N is achieved

**B. Examples**

The catalyst used in the polymerization process for all examples was *Anti*-dimethylsilanediyl[2-methyl-4,8-di(3,5-dimethylphenyl)-1,5,6,7-tetrahydro-*s*-indacen-1-yl][2-methyl-4-(3,5-dimethylphenyl)-5-methoxy-6-*tert*-butylinden-1-yl] zirconium dichloride as disclosed in WO 2019/179959 A1 as MC-2. The supported metallocene catalyst was produced analogously to IE2 in WO 2019/179959 A1.

Inventive Examples IE1 to IE4 and comparative examples CE1 and CE2 were polymerized according to the conditions given in Table 1 (note: The $MFR_2$, C2 and C4 content given after reactor R2 are the properties of the GPR fraction and were calculated from the values measured after the loop reactor (i.e. PP1) and in the final pellets (i.e. PP), using appropriate mixing rules).

CE3 is a Ziegler-Natta catalyzed propylene/ethylene/1-butene terpolymer commercially available from Borealis AG with the trade name TD310BF.

**Table 1:** Polymerisation conditions and properties of the inventive and comparative propylene/ethylene/1-butene terpolymers

| | | CE1 | CE2 | IE1 | IE2 | IE3 | IE4 | CE3 |
|---|---|---|---|---|---|---|---|---|
| **Prepolymerization (R0)** | | | | | | | | |
| Temperature | [°C] | 20 | 20 | 20 | 20 | 20 | 20 | - |
| Pressure | [kPa] | 5200 | 5200 | 5100 | 5100 | 5100 | 5100 | - |
| Residence time | [h] | 0.34 | 0.34 | 0.33 | 0.36 | 0.36 | 0.35 | - |
| **Loop (R1)** | | | | | | | | |
| Temperature | [°C] | 65 | 65 | 70 | 70 | 68 | 67 | - |
| Pressure | [kPa] | 5100 | 5100 | 4900 | 5000 | 5000 | 5000 | - |
| H2/C3 ratio | [mol/kmol] | 0.10 | 0.09 | 0.11 | 0.11 | 0.10 | 0.10 | - |
| C2/C3 ratio | [mol/kmol] | 17.2 | 17.3 | 18.0 | 18.2 | 18.6 | 18.6 | - |
| C4/C3 ratio | [mol/kmol] | 35.5 | 51.1 | 36.7 | 37.3 | 38.0 | 38.7 | - |
| split | [wt.-%] | 100 | 100 | 75 | 56 | 51 | 43 | - |
| $MFR_2$ | [g/10 min] | 4.9 | 3.4 | 6.7 | 5.9 | 5.6 | 5.8 | - |
| C2 content | [mol-%] | 1.43 | 1.52 | 1.95 | 1.95 | 1.36 | 1.51 | - |
| C4 content | [mol-%] | 2.49 | 3.49 | 2.48 | 2.40 | 2.56 | 2.56 | - |
| **GPR (R2)** | | | | | | | | |
| Temperature | [°C] | - | - | 75 | 75 | 75 | 75 | - |
| Pressure | [kPa] | - | - | 2500 | 2500 | 2500 | 2500 | - |
| H2/C3 ratio | [mol/kmol] | - | - | 1.50 | 1.49 | 1.32 | 1.28 | - |
| C2/C3 ratio | [mol/kmol] | - | - | 109 | 114 | 96 | 106 | - |
| C4/C3 ratio | [mol/kmol] | - | - | 40.8 | 30.5 | 35.5 | 35.3 | - |
| split | [wt.-%] | - | - | 25 | 44 | 49 | 57 | - |
| $MFR_2$ | [g/10 min] | - | - | 12.9 | 8.7 | 6.7 | 5.8 | - |
| C2 content | [mol-%] | - | - | 4.12 | 5.36 | 4.95 | 4.93 | - |
| C4 content | [mol-%] | - | - | 4.86 | 3.28 | 3.96 | 3.76 | - |
| **Pellets** | | | | | | | | |
| $MFR_2$ | [g/10min] | 5.0 | 4.0 | 7.9 | 7.0 | 6.1 | 5.8 | 6.0 |
| XCS | [wt.-%] | 0.90 | 0.98 | 2.82 | 2.37 | 1.93 | 2.85 | 6.21 |
| C2 content | [mol-%] | 1.43 | 1.52 | 2.49 | 3.46 | 3.12 | 3.46 | 1.88 |
| C4 content | [mol-%] | 2.49 | 3.49 | 3.07 | 2.79 | 3.25 | 3.25 | 7.47 |
| 2,1 regiodefects | [mol-%] | 0.40 | 0.27 | 0.29 | 0.24 | 0.23 | 0.21 | 0.00 |
| Tm | [°C] | 137 | 133 | 133 | 131 | 130 | 129 | 131 |

(continued)

| Pellets | | | | | | | | |
|---|---|---|---|---|---|---|---|---|
| Hm | [°C] | 83.7 | 80.8 | 73.9 | 71.5 | 71.1 | 66.3 | n.m. |
| Tc | [°C] | 102 | 99 | 94 | 92 | 91 | 90 | 92 |
| $C6_{FDA}$ | [wt.-%] | 0.74 | 0.78 | 0.99 | 0.69 | 0.67 | 0.70 | 2.37 |
| $C6_{FDA}$/XCS | [-] | 0.82 | 0.80 | 0.35 | 0.29 | 0.35 | 0.25 | 0.38 |

**Table 2:** Properties of 50 μm cast films made from the inventive and comparative propylene/ethylene/1-butene terpolymers

| | | CE1 | CE2 | IE1 | IE2 | IE3 | IE4 | CE3 |
|---|---|---|---|---|---|---|---|---|
| Tensile Modulus (MD) | [MPa] | 646 | 586 | 555 | 491 | 495 | 461 | 453 |
| Clarity | [%] | 85.4 | 76.7 | 99.9 | 97.4 | 96.9 | 94.7 | n.m. |
| Haze | [%] | 1.18 | 1.93 | 0.16 | 1.67 | 1.75 | 2.38 | n.m. |
| Hot Tack Force | [N] | 2.76 | 4.22 | 3.70 | 3.18 | 3.40 | 3.28 | 2.83 |
| SIT | [°C] | 112 | 109 | 106 | 106 | 105 | 104 | 105 |

As can be seen from Table 2, the clarity of each of the bimodal inventive examples is far better than for the unimodal comparative examples CE1 and CE2. Furthermore, the SIT values are much lower than for the unimodal compositions.

When individual examples are compared, a number of further advantages would be clear to the person skilled in the art.

IE1 has much better optical properties (haze and clarity) than either of CE1 or CE2 at a similar comonomer content, in addition to lower SIT and similar Hot Tack Force when compared to CE2 and lower Tm, lower SIT and improved Hot Tack Force when compared to CE1.

IE2 has similar properties to CE3; however requires much less 1-butene to achieve said properties. Furthermore, the Hot Tack Force is superior.

IE3 and IE4 similarly have less 1-butene than CE3 and achieve lower Tm, higher Hot Tack Force and similar SIT.

Furthermore, the inventive examples have a noticeably better ratio of C6 extractables to XCS. CE1 and CE2 require higher 1-butene contents to achieve acceptable Hot Tack Force, which leads to a higher proportion of the XCS content also being hexane-extractable. This may cause issues such as blooming.

It is clear that the inventive SSC-catalysed bimodal terpolymers offer an improved balance of optical and sealing properties in comparison to SSC-catalysed unimodal terpolymers (CE1 and CE2) and Ziegler-Natta catalysed terpolymers (CE3).

## Claims

**1.** A monophasic bimodal propylene/ethylene/1-butene random terpolymer composition (PP) comprising:

a) 40 to 90 wt.-%, relative to the total weight of the monophasic bimodal propylene/ethylene/1-butene random terpolymer composition, of a first random terpolymer fraction (PP1), having an ethylene content (C2), as determined by $^{13}$C-NMR spectroscopy, in the range from 0.3 to 3.0 mol-%, and a 1-butene content (C4), as determined by $^{13}$C-NMR spectroscopy, in the range from 1.0 to 5.0 mol-%; and
b) 10 to 60 wt.-%, relative to the total weight of the monophasic bimodal propylene/ethylene/1-butene random terpolymer composition, of a second random terpolymer fraction (PP2), having an ethylene content (C2), as determined by $^{13}$C-NMR spectroscopy, in the range from 3.0 to 7.0 mol-%, and a 1-butene content (C4), as determined by $^{13}$C-NMR spectroscopy, in the range from 2.0 to 6.0 mol-%,
wherein the first random terpolymer fraction (PP1) and the second random terpolymer fraction (PP2) combined make up at least 95 wt.-% of the total weight of the monophasic bimodal propylene/ethylene/1-butene random terpolymer composition (PP),
wherein the monophasic bimodal propylene/ethylene/1-butene random terpolymer composition (PP) has each of the following properties:

i) an ethylene content (C2), as determined by $^{13}C$-NMR spectroscopy, in the range from 1.0 to 4.0 mol-%;
ii) a 1-butene content (C4), as determined by $^{13}C$-NMR spectroscopy, in the range from 1.5 to 4.5 mol-%;
iii) a melt flow rate ($MFR_2$), determined according to ISO 1133 at 230 °C at a load of 2.16 kg, in the range from 3.0 to 10 g/10 min; and
iv) a content of 2,1-regiodefects, as determined by quantitative $^{13}C$-NMR spectroscopy analysis, in the range from 0.1 to 1.5 mol%.

**2.** The monophasic bimodal propylene/ethylene/1-butene random terpolymer composition (PP) according to claim 1, having a xylene cold soluble content (XCS), as determined according to ISO 16152, in the range from 1.00 to 4.00 wt.-%.

**3.** The monophasic bimodal propylene/ethylene/1-butene random terpolymer composition (PP) according to claim 1 or claim 2, having a melting temperature, determined according to DSC analysis, in the range from 120 to 140 °C, preferably wherein said melting temperature has an associated enthalpy of fusion, determined according to DSC analysis, in the range from 50 to 80 J/g.

**4.** The monophasic bimodal propylene/ethylene/1-butene random terpolymer composition (PP) according to any one of the preceding claims 1 to 3, wherein

a) the first random terpolymer fraction (PP1) has a melt flow rate ($MFR_2$), determined according to ISO 1133 at 230 °C at a load of 2.16 kg, in the range from 1.0 to 10.0 g/10 min, and
b) the second random terpolymer fraction (PP2) has a melt flow rate ($MFR_2$), determined according to ISO 1133 at 230 °C at a load of 2.16 kg, in the range from 1.0 to 20.0 g/10 min,

wherein the ratio of the melt flow rate ($MFR_2$) of the monophasic bimodal propylene/ethylene/1-butene random terpolymer composition (PP) to the melt flow rate ($MFR_2$) of the first random terpolymer fraction (PP1), both determined according to ISO 1133 at 230 °C at a load of 2.16 kg and expressed in g/10 min, ([MFR(PP)]/[MFR(PP1)]) is in the range from 0.50 to 1.50.

**5.** The monophasic bimodal propylene/ethylene/1-butene random terpolymer composition (PP) according to any one of the preceding claims 1 to 4, wherein the ratio of the ethylene content of the monophasic bimodal propylene/ethylene/1-butene random terpolymer composition (PP) to the ethylene content of the first random terpolymer fraction (PP1), both determined by quantitative $^{13}C$-NMR spectroscopy and expressed in mol-%, ([C2(PP)]/[C2(PP1)]) is in the range from 1.00 to 4.00, and/or
the ratio of the 1-butene content of the monophasic bimodal propylene/ethylene/1-butene random terpolymer composition (PP) to the 1-butene content of the first random terpolymer fraction (PP1), both determined by quantitative $^{13}C$-NMR spectroscopy and expressed in mol-%, ([C2(PP)]/[C2(PP1)]) is in the range from 1.00 to 2.00.

**6.** The monophasic bimodal propylene/ethylene/1-butene random terpolymer composition (PP) according to any one of the preceding claims 1 to 5, comprising 50 to 85 wt.-%, relative to the total weight of the monophasic bimodal propylene/ethylene/1-butene random terpolymer composition, of the first random terpolymer fraction (PP1) and 15 to 50 wt.-%, relative to the total weight of the monophasic bimodal propylene/ethylene/1-butene random terpolymer composition, of the second random terpolymer fraction (PP2),
more preferably comprising 60 to 80 wt.-%, relative to the total weight of the monophasic bimodal propylene/ethylene/1-butene random terpolymer composition, of the first random terpolymer fraction (PP1) and 20 to 40 wt.-%, relative to the total weight of the monophasic bimodal propylene/ethylene/1-butene random terpolymer composition, of the second random terpolymer fraction (PP2).

**7.** The monophasic bimodal propylene/ethylene/1-butene random terpolymer composition (PP) according to any one of the preceding claims 1 to 6, having a crystallization temperature, determined according to DSC analysis, in the range from 88 to 97 °C.

**8.** The monophasic bimodal propylene/ethylene/1-butene random terpolymer composition (PP) according to any one of the preceding claims 1 to 7, having one or more of, preferably both of, the following properties:

a) a hexane soluble fraction according to the FDA method ($C6_{FDA}$) in the range from 0.00 to 1.00 wt.-%, and
b) a ratio between the hexane soluble fraction according to the FDA method ($C6_{FDA}$) and the xylene cold soluble content (XCS), as determined according to ISO 16152, ([$C6_{FDA}$]/[XCS]) in the range from 0.10 to 0.70.

**9.** A process for producing the monophasic bimodal propylene/ethylene/1-butene random terpolymer composition (PP) according to any one of the preceding claims, comprising the steps of:

a) polymerizing propylene, ethylene and 1-butene comonomer units in a first polymerization reactor in the presence of a single-site catalyst to produce a first polymerization mixture comprising the first random terpolymer fraction (PP1) and the single-site catalyst, wherein the first polymerization reactor is preferably a slurry reactor, more preferably a loop reactor;
b) transferring the first polymerization mixture into a second polymerization reactor, preferably a gas phase reactor;
c) polymerizing propylene, ethylene and 1-butene comonomer units in said second polymerization reactor in the presence of said single-site catalyst to produce a second polymerization mixture comprising the first random terpolymer fraction (PP1), the second random terpolymer fraction (PP2) and the single-site catalyst;
d) withdrawing said second polymerization mixture from said second polymerization reactor; and
e) compounding said second polymerization mixture optionally with the addition of additives to form the monophasic bimodal propylene/ethylene/1-butene random terpolymer composition (PP).

**10.** The process according to claim 9, wherein the single site catalyst comprises:

(i) a metallocene complex of the general formula (I)

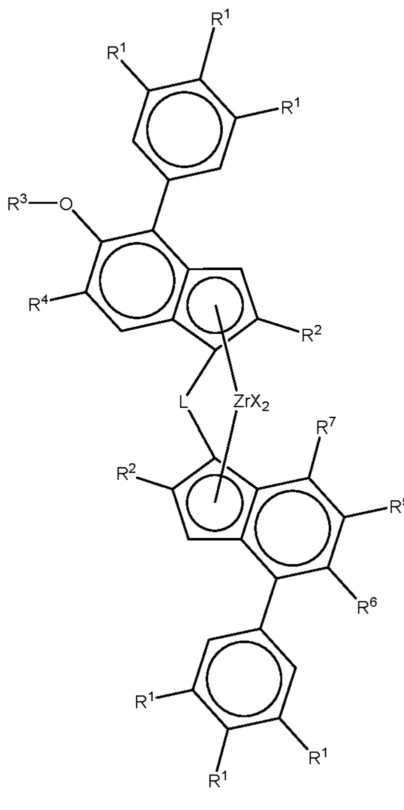

Formula (I)

wherein each X independently is a sigma-donor ligand,
L is a divalent bridge selected from $-R'_2C-$, $-R'_2C-CR'_2-$, $-R'_2Si-$, $-R'_2Si-SiR'_2-$, $-R'_2Ge-$, wherein each R' is independently a hydrogen atom or a $C_1$-$C_{20}$-hydrocarbyl group optionally containing one or more heteroatoms from groups 14-16 of the periodic table or fluorine atoms, or optionally two R' groups taken together can form a ring,
each $R^1$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group, and optionally two adjacent $R^1$ groups can be part of a ring including the phenyl carbons to which they are bonded,
each $R^2$ independently are the same or can be different and are a $CH_2$-$R^8$ group, with $R^8$ being H or linear or branched $C_{1-6}$-alkyl group, $C_{3-8}$-cycloalkyl group, $C_{6-10}$-aryl group,

$R^3$ is a linear or branched $C_1$-$C_6$-alkyl group, $C_{7-20}$-arylalkyl, $C_{7-20}$-alkylaryl group or $C_6$-$C_{20}$-aryl group,
$R^4$ is a $C(R^9)_3$ group, with $R^9$ being a linear or branched $C_1$-$C_6$-alkyl group,
$R^5$ is hydrogen or an aliphatic $C_1$-$C_{20}$-hydrocarbyl group optionally containing one or more heteroatoms from groups 14-16 of the periodic table;
$R^6$ is hydrogen or an aliphatic $C_1$-$C_{20}$-hydrocarbyl group optionally containing one or more heteroatoms from groups 14-16 of the periodic table; or
$R^5$ and $R^6$ can be taken together to form a 5 membered saturated carbon ring which is optionally substituted by n groups $R^{10}$, n being from 0 to 4;
each $R^{10}$ is same or different and may be a $C_1$-$C_{20}$-hydrocarbyl group, or a $C_1$-$C_{20}$-hydrocarbyl group optionally containing one or more heteroatoms belonging to groups 14-16 of the periodic table;
$R^7$ is H or a linear or branched $C_1$-$C_6$-alkyl group or an aryl or heteroaryl group having 6 to 20 carbon atoms optionally substituted by one to three groups $R^{11}$, each $R^{11}$ are independently the same or can be different and are hydrogen, a linear or branched $C_1$-$C_6$-alkyl group, a $C_{7-20}$-arylalkyl, $C_{7-20}$-alkylaryl group or $C_{6-20}$-aryl group or an OY group, wherein Y is a $C_{1-10}$-hydrocarbyl group,

(ii) a co-catalyst system comprising a boron containing co-catalyst and/or an aluminoxane co-catalyst, and
(iii) a silica support.

**11.** The monophasic bimodal propylene/ethylene/1-butene random terpolymer composition (PP) according to any one of claims 1 to 8, wherein the monophasic bimodal propylene/ethylene/1-butene random terpolymer composition (PP) is obtainable via the process according to either claim 9 or claim 10.

**12.** An article, more preferably a film, comprising the monophasic bimodal propylene/ethylene/1-butene random terpolymer composition (PP) according to any one of claims 1 to 8 or 11 in an amount of at least 75 wt.-%, more preferably at least 90 wt.-%, most preferably at least 95 wt.-%.

**13.** The article according to claim 12 being a film, more preferably a cast film, having a sealing initiation temperature (SIT) in the range from 100 to 115 °C.

**14.** The article according to claim 12 or 13 having a Hot Tack Force, determined according to ASTM F1921 -12 - Method B, in the range from 2.0 to 5.0 N.

**15.** The article according to any one of claims 12 to 14 being a film, more preferably a cast film, having a haze value, determined according to ASTM D1003, in the range from 0.0 to 3.0%.

## Patentansprüche

**1.** Monophasige bimodale statistische Propylen/Ethylen/1-Buten-Terpolymer-Zusammensetzung (PP), umfassend:

a) 40 bis 90 Gew.-40 bis 90 Gew.-%, bezogen auf das Gesamtgewicht der einphasigen bimodalen statistischen Propylen/Ethylen/1-Buten-Terpolymerzusammensetzung, einer ersten statistischen Terpolymerfraktion (PP1) mit einem Ethylengehalt (C2), wie durch $^{13}C$-NMR-Spektroskopie bestimmt, im Bereich von 0,3 bis 3,0 Mol-% und einem 1-Butengehalt (C4), wie durch $^{13}C$-NMR-Spektroskopie bestimmt, im Bereich von 1,0 bis 5,0 Mol-%; und
b) 10 bis 60 Gew.-%, bezogen auf das Gesamtgewicht der einphasigen bimodalen statistischen Propylen/Ethylen/1-Buten-Terpolymerzusammensetzung, einer zweiten statistischen Terpolymerfraktion (PP2) mit einem Ethylengehalt (C2), wie durch $^{13}C$-NMR-Spektroskopie bestimmt, im Bereich von 3,0 bis 7,0 Mol-% und einem 1-Butengehalt (C4), wie durch $^{13}C$-NMR-Spektroskopie bestimmt, im Bereich von 2,0 bis 6,0 Mol-%,
wobei die erste statistische Terpolymerfraktion (PP1) und die zweite statistische Terpolymerfraktion (PP2) zusammen mindestens 95 Gew.-% des Gesamtgewichts der monophasischen bimodalen statistischen Propylen/Ethylen/1-Buten-Terpolymerzusammensetzung (PP) ausmachen,
wobei die monophasische bimodale statistische Propylen/Ethylen/1-Buten-Terpolymer-Zusammensetzung (PP) jede der folgenden Eigenschaften aufweist:

i) einen Ethylengehalt (C2), bestimmt durch $^{13}C$-NMR-Spektroskopie, im Bereich von 1,0 bis 4,0 Mol-%;
ii) einen 1-Buten-Gehalt (C4), bestimmt durch $^{13}C$-NMR-Spektroskopie, im Bereich von 1,5 bis 4,5 Mol-%;
iii) eine Schmelzflussrate ($MFR_2$), bestimmt nach ISO 1133 bei 230 °C und einer Last von 2,16 kg, im Bereich

von 3,0 bis 10 g/10 min; und
iv) einen durch quantitative $^{13}C$-NMR-Spektroskopie-Analyse ermittelten Gehalt an 2,1-Regiendefekten im Bereich von 0,1 bis 1,5 Mol-%.

**2.** Monophasige bimodale statistische Propylen/Ethylen/1-Buten-Terpolymerzusammensetzung (PP) gemäß Anspruch 1 mit einem Gehalt an in Xylol kalt löslichem Material (XCS), bestimmt nach ISO 16152, im Bereich von 1,00 bis 4,00 Gew.-%.

**3.** Monophasige bimodale statistische Propylen/Ethylen/1-Buten-Terpolymer-Zusammensetzung (PP) gemäß Anspruch 1 oder Anspruch 2 mit einer mittels DSC-Analyse bestimmten Schmelztemperatur im Bereich von 120 bis 140 °C,
wobei die Schmelztemperatur vorzugsweise eine zugehörige Schmelzenthalpie, bestimmt nach der DSC-Analyse, im Bereich von 50 bis 80 J/g aufweist.

**4.** Monophasige bimodale statistische Propylen/Ethylen/1-Buten-Terpolymer-Zusammensetzung (PP) gemäß einem der vorhergehenden Ansprüche 1 bis 3, wobei

a) die erste statistische Terpolymerfraktion (PP1) eine Schmelzflussrate ($MFR_2$), bestimmt nach ISO 1133 bei 230 °C und einer Belastung von 2,16 kg, im Bereich von 1,0 bis 10,0 g/10 min aufweist, und
b) die zweite statistische Terpolymerfraktion (PP2) hat eine Schmelzflussrate ($MFR_2$), bestimmt nach ISO 1133 bei 230 °C und einer Belastung von 2,16 kg, im Bereich von 1,0 bis 20,0 g/10 min,

wobei das Verhältnis der Schmelzflussrate ($MFR_2$) der einphasigen bimodalen statistischen Propylen/Ethylen/1-Buten-Terpolymerzusammensetzung (PP) zur Schmelzflussrate ($MFR_2$) der ersten statistischen Terpolymerfraktion (PP1), die beide gemäß ISO 1133 bei 230 °C und einer Belastung von 2,16 kg bestimmt und in g/10 min ausgedrückt werden, ([MFR(PP)]/[MFR(PP1)]) im Bereich von 0,50 bis 1,50 liegt.

**5.** Monophasige bimodale statistische Propylen/Ethylen/1-Buten-Terpolymerzusammensetzung (PP) gemäß einem der vorhergehenden Ansprüche 1 bis 4, worin das Verhältnis des Ethylengehalts der monophasischen bimodalen statistischen Propylen/Ethylen/1-Buten-Terpolymerzusammensetzung (PP) zum Ethylengehalt der ersten statistischen Terpolymerfraktion (PP1), beide bestimmt durch quantitative $^{13}C$-NMR-Spektroskopie und ausgedrückt in Mol-%, ([C2(PP)]/[C2(PP1)]) im Bereich von 1,00 bis 4,00, und/oder das Verhältnis des 1-Buten-Gehalts der einphasigen bimodalen statistischen Propylen/Ethylen/1-Buten-Terpolymerzusammensetzung (PP) zum 1-Buten-Gehalt der ersten statistischen Terpolymerfraktion (PP1), beide bestimmt durch quantitative $^{13}C$-NMR-Spektroskopie und ausgedrückt in Mol-%, ([C2(PP)]/[C2(PP1)]) im Bereich von 1,00 bis 2,00 liegt.

**6.** Monophasige bimodale statistische Propylen/Ethylen/1-Buten-Terpolymerzusammensetzung (PP) gemäß einem der vorhergehenden Ansprüche 1 bis 5, umfassend 50 bis 85 Gew.-%, bezogen auf das Gesamtgewicht der monophasigen bimodalen statistischen Propylen/Ethylen/1-Buten-Terpolymerzusammensetzung, der ersten statistischen Terpolymerfraktion (PP1) und 15 bis 50 Gew.-%, bezogen auf das Gesamtgewicht der einphasigen bimodalen statistischen Propylen/Ethylen/1-Buten-Terpolymerzusammensetzung, der zweiten statistischen Terpolymerfraktion (PP2),
vorzugsweise bestehend aus 60 bis 80 Gew.-%, bezogen auf das Gesamtgewicht der monophasischen bimodalen statistischen Propylen/Ethylen/1-Buten-Terpolymerzusammensetzung, der ersten statistischen Terpolymerfraktion (PP1) und 20 bis 40 Gew.-%, bezogen auf das Gesamtgewicht der monophasischen bimodalen statistischen Propylen/Ethylen/1-Buten-Terpolymerzusammensetzung, der zweiten statistischen Terpolymerfraktion (PP2).

**7.** Monophasige bimodale statistische Propylen/Ethylen/1-Buten-Terpolymer-Zusammensetzung (PP) gemäß einem der vorhergehenden Ansprüche 1 bis 6 mit einer Kristallisationstemperatur, bestimmt durch DSC-Analyse, im Bereich von 88 bis 97 °C.

**8.** Monophasige bimodale statistische Propylen/Ethylen/1-Buten-Terpolymer-Zusammensetzung (PP) gemäß einem der vorhergehenden Ansprüche 1 bis 7, die eine oder mehrere, vorzugsweise beide der folgenden Eigenschaften aufweist:

a) eine in Hexan lösliche Fraktion nach der FDA-Methode ($C6_{FDA}$) im Bereich von 0,00 bis 1,00 Gew.-%, und
b) ein Verhältnis zwischen der in Hexan löslichen Fraktion gemäß der FDA-Methode ($C6_{FDA}$) und dem in Xylol kalt löslichen Anteil (XCS), bestimmt gemäß ISO 16152, ([$C6_{FDA}$]/[XCS]) im Bereich von 0,10 bis 0,70.

**9.** Verfahren zur Herstellung der monophasischen bimodalen statistischen Propylen/Ethylen/1-Buten-Terpolymerzusammensetzung (PP) nach einem der vorhergehenden Ansprüche, umfassend die Schritte:

a) Polymerisieren von Propylen-, Ethylen- und 1-Buten-Comonomereinheiten in einem ersten Polymerisationsreaktor in Gegenwart eines Single-Site-Katalysators, um ein erstes Polymerisationsgemisch herzustellen, das die erste statistische Terpolymerfraktion (PP1) und den Single-Site-Katalysator umfasst, wobei der erste Polymerisationsreaktor vorzugsweise ein Slurry-Reaktor, noch bevorzugter ein Schleifenreaktor ist;
b) Überführung der ersten Polymerisationsmischung in einen zweiten Polymerisationsreaktor, vorzugsweise einen Gasphasenreaktor;
c) Polymerisieren von Propylen-, Ethylen- und 1-Buten-Comonomereinheiten in dem zweiten Polymerisationsreaktor in Gegenwart des Single-Site-Katalysators, um ein zweites Polymerisationsgemisch herzustellen, das die erste statistische Terpolymerfraktion (PP1), die zweite statistische Terpolymerfraktion (PP2) und den Single-Site-Katalysator umfasst;
d) Entnahme der zweiten Polymerisationsmischung aus dem zweiten Polymerisationsreaktor; und
e) Compoundieren der zweiten Polymerisationsmischung, gegebenenfalls unter Zugabe von Additiven, zur Bildung der monophasischen bimodalen statistischen Propylen/Ethylen/1-Buten-Terpolymerzusammensetzung (PP).

**10.** Verfahren gemäß Anspruch 9, wobei der Einzelstellen-Katalysator umfasst:

(i) einen Metallocenkomplex der allgemeinen Formel (I)

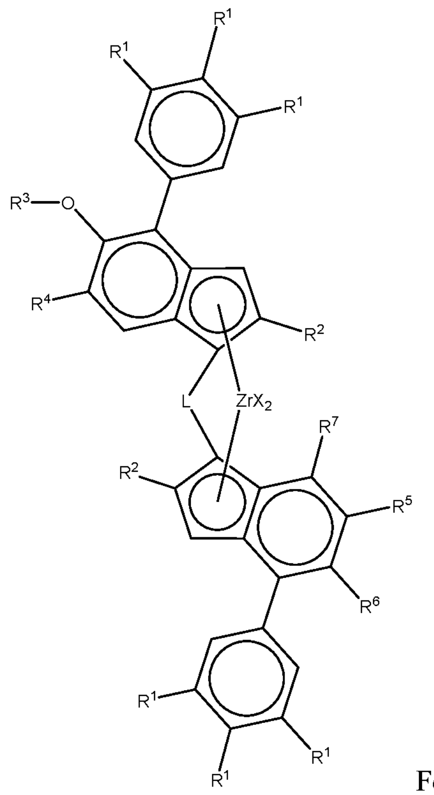

Formel (I)

worin jedes X unabhängig voneinander ein Sigma-Donor-Ligand ist,
L eine zweiwertige Brücke ist, ausgewählt aus $-R'_2C-$, $-R'_2C-CR'_2-$, $-R'_2Si-$, $-R'_2Si-SiR'_2-$, $-R'_2Ge-$, wobei jedes R' unabhängig ein Wasserstoffatom oder eine $C_1$-$C_{20}$-Kohlenwasserstoffgruppe ist, die gegebenenfalls ein oder mehrere Heteroatome aus den Gruppen 14-16 des Periodensystems oder Fluoratome enthält, oder gegebenenfalls zwei R'-Gruppen zusammengenommen einen Ring bilden können,
jedes $R^1$ unabhängig voneinander gleich ist oder verschieden sein kann und Wasserstoff, eine lineare oder verzweigte $C_1$-$C_6$-Alkylgruppe, eine $C_{7-20}$-Arylalkyl-, $C_{7-20}$-Alkylaryl- oder $C_{6-20}$-Arylgruppe oder eine OY-Gruppe ist, worin Y eine $C_{1-10}$-Kohlenwasserstoffgruppe ist, und gegebenenfalls zwei benachbarte $R^1$-Gruppen Teil eines Rings sein können, einschließlich der Phenylkohlenstoffe, an die sie gebunden sind,

jedes $R^2$ unabhängig voneinander gleich ist oder verschieden sein kann und eine $CH_2$-$R^8$-Gruppe ist, wobei $R^8$ H oder eine lineare oder verzweigte $C_{1-6}$-Alkylgruppe, $C_{3-8}$-Cycloalkylgruppe, $C_{6-10}$-Arylgruppe ist,
$R^3$ ist eine lineare oder verzweigte $C_1$-$C_6$-Alkylgruppe, $C_{7-20}$-Arylalkyl-, $C_{7-20}$-Alkylarylgruppe oder $C_6$-$C_{20}$-Arylgruppe,
$R^4$ eine $C(R^9)_3$-Gruppe ist, wobei $R^9$ eine lineare oder verzweigte $C_1$-$C_6$-Alkylgruppe ist,
$R^5$ Wasserstoff oder eine aliphatische $C_1$-$C_{20}$-Kohlenwasserstoffgruppe ist, die gegebenenfalls ein oder mehrere Heteroatome aus den Gruppen 14-16 des Periodensystems enthält;
$R^6$ Wasserstoff oder eine aliphatische $C_1$-$C_{20}$-Kohlenwasserstoffgruppe ist, die gegebenenfalls ein oder mehrere Heteroatome aus den Gruppen 14-16 des Periodensystems enthält; oder
$R^5$ und $R^6$ können zusammengenommen werden, um einen 5-gliedrigen gesättigten Kohlenstoffring zu bilden, der gegebenenfalls durch n Gruppen $R^{10}$ substituiert ist, wobei n von 0 bis 4 beträgt;
jedes $R^{10}$ ist gleich oder verschieden und kann eine $C_1$-$C_{20}$-Kohlenwasserstoffgruppe oder eine $C_1$-$C_{20}$-Kohlenwasserstoffgruppe sein, die gegebenenfalls ein oder mehrere Heteroatome enthält, die zu den Gruppen 14-16 des Periodensystems gehören;
$R^7$H oder eine lineare oder verzweigte $C_1$-$C_6$-Alkylgruppe oder eine Aryl- oder Heteroarylgruppe mit 6 bis 20 Kohlenstoffatomen ist, die gegebenenfalls mit einer bis drei Gruppen $R^{11}$ substituiert ist,
jedes $R^{11}$ unabhängig voneinander gleich ist oder verschieden sein kann und Wasserstoff, eine lineare oder verzweigte $C_1$-$C_6$-Alkylgruppe, eine $C_{7-20}$-Arylalkyl-, $C_{7-20}$-Alkylaryl- oder $C_{6-20}$-Arylgruppe oder eine OY-Gruppe ist, wobei Y eine $C_{1-10}$-Kohlenwasserstoffgruppe ist,

(ii) ein Co-Katalysatorsystem, das einen borhaltigen Co-Katalysator und/oder einen Aluminoxan-Co-Katalysator umfasst, und
(iii) einen Silikat-Träger.

**11.** Monophasige bimodale statistische Propylen/Ethylen/1-Buten-Terpolymer-Zusammensetzung (PP) gemäß einem der Ansprüche 1 bis 8, wobei die monophasige bimodale statistische Propylen/Ethylen/1-Buten-Terpolymer-Zusammensetzung (PP) durch das Verfahren nach Anspruch 9 oder 10 erhältlich ist.

**12.** Gegenstand, vorzugsweise eine Folie, umfassend die monophasische bimodale statistische Propylen/Ethylen/1-Buten-Terpolymerzusammensetzung (PP) nach einem der Ansprüche 1 bis 8 oder 11 in einer Menge von mindestens 75 Gew.-%, bevorzugter mindestens 90 Gew.-%, am meisten bevorzugt mindestens 95 Gew.-%.

**13.** Der Gegenstand gemäß Anspruch 12, der eine Folie, vorzugsweise eine Gießfolie ist, mit eine Siegelbeginntemperatur (SIT) im Bereich von 100 bis 115 °C.

**14.** Gegenstand gemäß Anspruch 12 oder 13 mit einer Heißklebekraft, bestimmt nach ASTM F1921-12 - Methode B, im Bereich von 2,0 bis 5,0 N.

**15.** Der Gegenstand gemäß einem der Ansprüche 12 bis 14, der eine Folie, vorzugsweise eine Gießfolie ist, mit einen Trübungswert, bestimmt nach ASTM D1003, im Bereich von 0,0 bis 3,0 %.

## Revendications

**1.** Composition de terpolymère statistique monophasique bimodal de propylène/éthylène/1-butène (PP) comprenant :

a) 40 à 90 % en poids, par rapport au poids total de la composition de terpolymère statistique monophasique bimodal de propylène/éthylène/1-butène, d'une première fraction de terpolymère statistique (PP1), présentant une teneur en éthylène (C2), telle que déterminée par spectroscopie RMN-$^{13}$C, dans la plage de 0,3 à 3,0 % en mole, et une teneur en 1-butène (C4), telle que déterminée par spectroscopie RMN-$^{13}$C, dans la plage de 1,0 à 5,0 % en mole ; et
b) 10 à 60 % en poids, par rapport au poids total de la composition de terpolymère statistique monophasique bimodal de propylène/éthylène/1-butène, d'une seconde fraction de terpolymère statistique (PP2), présentant une teneur en éthylène (C2), telle que déterminée par spectroscopie RMN-$^{13}$C, dans la plage de 3,0 à 7,0 % en mole, et une teneur en 1-butène (C4), telle que déterminée par spectroscopie RMN-$^{13}$C, dans la plage de 2,0 à 6,0 % en mole,
dans laquelle la première fraction de terpolymère statistique (PP1) et la seconde fraction de terpolymère statistique (PP2) combinées représentent au moins 95 % en poids du poids total de la composition de terpolymère

statistique monophasique bimodal de propylène/éthylène/1-butène (PP),
dans laquelle la composition de terpolymère statistique monophasique bimodal de propylène/éthylène/1-butène (PP) présente chacune des propriétés suivantes :

i) une teneur en éthylène (C2), telle que déterminée par spectroscopie RMN-$^{13}$C, dans la plage de 1,0 à 4,0 % en mole ;
ii) une teneur en 1-butène (C4), telle que déterminée par spectroscopie RMN-$^{13}$C, dans la plage de 1,5 à 4,5 % en mole ;
iii) un indice de fluidité à chaud ($MFR_2$), déterminé selon l'ISO 1133 à 230 °C à une charge de 2,16 kg, dans la plage de 3,0 à 10 g/10 min ; et
iv) une teneur en régiodéfauts 2,1, telle que déterminée par analyse quantitative par spectroscopie RMN-$^{13}$C, dans la plage de 0,1 à 1,5 % en mole.

**2.** Composition de terpolymère statistique monophasique bimodal de propylène/éthylène/1-butène (PP) selon la revendication 1, présentant une teneur en substance soluble à froid dans le xylène (XCS), telle que déterminée selon l'ISO 16152, dans la plage de 1,00 à 4,00 % en poids.

**3.** Composition de terpolymère statistique monophasique bimodal de propylène/éthylène/1-butène (PP) selon la revendication 1 ou la revendication 2, présentant une température de fusion, déterminée par analyse DSC, dans la plage de 120 à 140 °C, de préférence dans laquelle ladite température de fusion a une enthalpie de fusion associée, déterminée par analyse DSC, dans la plage de 50 à 80 J/g.

**4.** Composition de terpolymère statistique monophasique bimodal de propylène/éthylène/1-butène (PP) selon l'une quelconque des revendications 1 à 3 précédentes, dans laquelle

a) la première fraction de terpolymère statistique (PP1) présente un indice de fluidité à chaud ($MFR_2$), déterminé selon l'ISO 1133 à 230 °C à une charge de 2,16 kg, dans la plage de 1,0 à 10,0 g/10 min, et
b) la seconde fraction de terpolymère statistique (PP2) présente un indice de fluidité à chaud ($MFR_2$), déterminé selon l'ISO 1133 à 230 °C à une charge de 2,16 kg, dans la plage de 1,0 à 20,0 g/10 min,

/dans laquelle le rapport de l'indice de fluidité à chaud ($MFR_2$) de la composition de terpolymère statistique monophasique bimodale de propylène/éthylène/1-butène (PP) sur l'indice de fluidité à chaud ($MFR_2$) de la première fraction de terpolymère statistique (PP1), tous deux déterminés selon l'ISO 1133 à 230 °C à une charge de 2,16 kg et exprimés en g/10 min, ([MFR(PP)]/[MFR(PP1)]) est dans la plage de 0,50 à 1,50.

**5.** Composition de terpolymère statistique monophasique bimodal de propylène/éthylène/1-butène (PP) selon l'une quelconque des revendications 1 à 4 précédentes, dans laquelle le rapport de la teneur en éthylène de la composition de terpolymère statistique monophasique bimodal de propylène/éthylène/1-butène (PP) sur la teneur en éthylène de la première fraction de terpolymère statistique (PP1), toutes deux déterminées par spectroscopie RMN-$^{13}$C quantitative et exprimées en % en mole, ([C2(PP)]/[C2(PP1)]) est dans la plage de 1,00 à 4,00, et/ou
le rapport de la teneur en 1-butène de la composition de terpolymère statistique monophasique bimodal de propylène/éthylène/1-butène (PP) sur la teneur en 1-butène de la première fraction de terpolymère statistique (PP1), toutes deux déterminées par spectroscopie RMN-$^{13}$C quantitative et exprimées en % en mole, ([C2(PP)]/[C2(PP1)]) est dans la plage de 1,00 à 2,00.

**6.** Composition de terpolymère statistique monophasique bimodal de propylène/éthylène/1-butène (PP) selon l'une quelconque des revendications 1 à 5 précédentes, comprenant 50 à 85 % en poids, par rapport au poids total de la composition de terpolymère statistique monophasique bimodal de propylène/éthylène/1-butène, de la première fraction de terpolymère statistique (PP1) et 15 à 50 % en poids, par rapport au poids total de la composition de terpolymère statistique monophasique bimodal de propylène/éthylène/1-butène, de la seconde fraction de terpolymère statistique (PP2),
de manière davantage préférée comprenant 60 à 80 % en poids, par rapport au poids total de la composition de terpolymère statistique monophasique bimodal de propylène/éthylène/1-butène, de la première fraction de terpolymère statistique (PP1) et 20 à 40 % en poids, par rapport au poids total de la composition de terpolymère statistique monophasique bimodal de propylène/éthylène/1-butène, de la seconde fraction de terpolymère statistique (PP2).

**7.** Composition de terpolymère statistique monophasique bimodal de propylène/éthylène/1-butène (PP) selon l'une quelconque des revendications 1 à 6 précédentes, présentant une température de cristallisation, déterminée par

analyse DSC, dans la plage de 88 à 97 °C.

**8.** Composition de terpolymère statistique monophasique bimodal de propylène/éthylène/1-butène (PP) selon l'une quelconque des revendications 1 à 7 précédentes, présentant une ou plusieurs des propriétés suivantes, de préférence les deux :

a) une fraction soluble dans l'hexane selon le procédé FDA ($C6_{FDA}$) dans la plage de 0,00 à 1,00 % en poids, et
b) un rapport entre la fraction soluble dans l'hexane selon le procédé FDA ($C6_{FDA}$) et la teneur en substance soluble à froid dans le xylène (XCS), telle que déterminée selon l'ISO 16152, ($[C6_{FDA}]/[XCS]$) dans la plage de 0,10 à 0,70.

**9.** Procédé de production de la composition de terpolymère statistique monophasique bimodal de propylène/éthylène/1-butène (PP) selon l'une quelconque des revendications précédentes, comprenant les étapes suivantes :

a) la polymérisation de motifs comonomères de propylène, d'éthylène et de 1-butène dans un premier réacteur de polymérisation en présence d'un catalyseur monosite pour produire un premier mélange de polymérisation comprenant la première fraction de terpolymère statistique (PP1) et le catalyseur monosite, dans lequel le premier réacteur de polymérisation est de préférence un réacteur pour suspension, de manière davantage préférée un réacteur à boucle ;
b) le transfert du premier mélange de polymérisation dans un second réacteur de polymérisation, de préférence un réacteur pour phase gazeuse ;
c) la polymérisation de motifs comonomères de propylène, d'éthylène et de 1-butène dans ledit second réacteur de polymérisation en présence dudit catalyseur monosite pour produire un second mélange de polymérisation comprenant la première fraction de terpolymère statistique (PP1), la seconde fraction de terpolymère statistique (PP2) et le catalyseur monosite ;
d) le retrait dudit second mélange de polymérisation dudit second réacteur de polymérisation ; et
e) le mélange dudit second mélange de polymérisation optionnellement avec l'ajout d'additifs pour former la composition de terpolymère statistique monophasique bimodal de propylène/éthylène/1-butène (PP).

**10.** Procédé selon la revendication 9, dans lequel le catalyseur monosite comprend :

(i) un complexe de métallocène de formule générale (I)

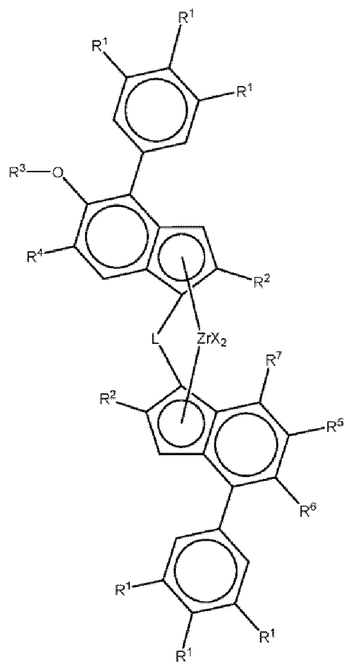

Formule (I)

dans lequel chaque X est indépendamment un ligand donneur sigma,
L est un pont divalent sélectionné parmi $-R'_2C-$, $-R'_2C-CR'_2-$, $-R'_2Si-$, $-R'_2Si-SiR'_2-$, $-R'_2Ge-$, dans lequel

chaque R' est indépendamment un atome d'hydrogène ou un groupe hydrocarbyle en $C_1$-$C_{20}$ contenant optionnellement un ou plusieurs hétéroatomes des groupes 14 à 16 du tableau périodique ou atomes de fluor, ou optionnellement deux groupes R' pris ensemble peuvent former un cycle,
les $R^1$ sont chacun indépendamment identiques ou peuvent être différents et sont un hydrogène, un groupe alkyle linéaire ou ramifié en $C_1$-$C_6$, un arylalkyle en $C_{7-20}$, un groupe alkylaryle en $C_{7-20}$ ou un groupe aryle en $C_{6-20}$ ou un groupe OY, dans lequel Y est un groupe hydrocarbyle en $C_{1-10}$, et optionnellement deux groupes $R^1$ adjacents peuvent faire partie d'un cycle comprenant les carbones du phényl auxquels ils sont liés,
les $R^2$ sont chacun indépendamment identiques ou peuvent être différents et sont un groupe $CH_2$-$R^8$, $R^8$ étant H ou un groupe alkyle linéaire ou ramifié en $C_{1-6}$, un groupe cycloalkyle en $C_3$-$C_8$, un groupe aryle en $C_6$-$C_{10}$,
$R^3$ est un groupe alkyle linéaire ou ramifié en $C_1$-$C_6$, un arylalkyle en $C_{7-20}$, un groupe alkylaryle en $C_{7-20}$ ou un groupe aryle en $C_6$-$C_{20}$,
$R^4$ est un groupe $C(R^9)_3$, $R^9$ étant un groupe alkyle linéaire ou ramifié en $C_1$-$C_6$,
$R^5$ est un hydrogène ou un groupe hydrocarbyle aliphatique en $C_1$-$C_{20}$ contenant optionnellement un ou plusieurs hétéroatomes des groupes 14 à 16 du tableau périodique ;
$R^6$ est un hydrogène ou un groupe hydrocarbyle aliphatique en $C_1$-$C_{20}$ contenant optionnellement un ou plusieurs hétéroatomes des groupes 14 à 16 du tableau périodique ; ou
$R^5$ et $R^6$ peuvent être pris ensemble pour former un cycle carboné saturé à 5 chaînons qui est optionnellement substitué avec n groupes $R^{10}$, n étant 0 à 4 ;
les $R^{10}$ sont identiques ou différents et peuvent être un groupe hydrocarbyle en $C_1$-$C_{20}$, ou un groupe hydrocarbyle en $C_1$-$C_{20}$ contenant optionnellement un ou plusieurs hétéroatomes appartenant aux groupes 14 à 16 du tableau périodique ;
$R^7$ est H ou un groupe alkyle linéaire ou ramifié en $C_1$-$C_6$ ou un groupe aryle ou hétéroaryle ayant 6 à 20 atomes de carbone optionnellement substitué avec un à trois groupes $R^{11}$, les $R^{11}$ sont indépendamment identiques ou peuvent être différents et sont un hydrogène, un groupe alkyle linéaire ou ramifié en $C_1$-$C_6$, un arylalkyle en $C_{7-20}$, un groupe alkylaryle en $C_{7-20}$ ou un groupe aryle en C6-20 ou un groupe OY, dans lequel Y est un groupe hydrocarbyle en $C_{1-10}$,

(ii) un système de cocatalyseur comprenant un cocatalyseur contenant du bore et/ou un cocatalyseur à aluminoxane, et
(iii) un support en silice.

**11.** Composition de terpolymère statistique monophasique bimodal de propylène/éthylène/1-butène (PP) selon l'une quelconque des revendications 1 à 8, dans laquelle la composition de terpolymère statistique monophasique bimodal de propylène/éthylène/1-butène (PP) peut être obtenue par le procédé selon la revendication 9 ou la revendication 10.

**12.** Article, de manière davantage préférée un film, comprenant la composition de terpolymère statistique monophasique bimodal de propylène/éthylène/1-butène (PP) selon l'une quelconque des revendications 1 à 8 ou 11 en une quantité d'au moins 75 % en poids, de manière davantage préférée d'au moins 90 % en poids, de manière préférée entre toutes d'au moins 95 % en poids.

**13.** Article selon la revendication 12 qui est un film, de manière davantage préférée un film coulé, présentant une température d'initiation de scellage (SIT) dans la plage de 100 à 115 °C.

**14.** Article selon la revendication 12 ou 13 présentant une force d'adhérence à chaud, déterminée selon l'ASTM F1921-12 - Procédé B, dans la plage de 2,0 à 5,0 N.

**15.** Article selon l'une quelconque des revendications 12 à 14 qui est un film, de manière davantage préférée un film coulé, présentant une valeur de trouble, déterminée selon l'ASTM D1003, dans la plage de 0,0 à 3,0 %.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2002057342 A1
- WO 2009019169 A1
- US 6388040 B
- EP 3192817 A1
- EP 1358252 A1
- WO 2013174778 A
- WO 2020157171 A1
- WO 2007116034 A
- WO 200202576 A
- WO 2011135004 A
- WO 2012084961 A
- WO 2012001052 A
- WO 2011076780 A
- WO 2015158790 A
- WO 2018122134 A
- WO 2019179959 A
- WO 2020239598 A1
- WO 2019179959 A1


### Non-patent literature cited in the description


- **HANS ZWEIFEL**. Plastic Additives Handbook. 2001, 871-873
- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45 (S1), S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **RESCONI, L.** ; **CAVALLO, L.** ; **FAIT, A.** ; **PIEMONTESI, F.** *Chem. Rev.*, 2000, vol. 100, 1253
- **A.J. BRANDOLINI** ; **D.D. HILLS**. NMR spectra of polymers and polymer additives. Marcel Deker Inc., 2000